# EUROPEAN PATENT APPLICATION

(11) **EP 4 746 521 A1**
(43) Date of publication of application: **20.05.2026**
(21) Application number: 24850980.4
(22) Date of filing: 06.08.2024
(51) Int. Cl.: H04W 36/38

(54) **DATA TRANSMISSION METHOD, AND APPARATUS**

(30) Priority: 10.08.2023 CN 202311015533
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN); ZHU, Yuanping, Shenzhen, Guangdong 518129 (CN)
(74) Representative: Isarpatent
(86) International application number: PCT/CN2024/109956
(87) International publication number: WO 2025/031335

(57) **Abstract**

This application provides a data transmission method and apparatus. The method is applied to a source base station in a handover process of a terminal device. The method includes: sending a first handover request, where the first handover request includes a quality of service QoS parameter for a protocol data unit PDU set of the terminal device; receiving first indication information, where the first indication information indicates a processing capability of a target base station in the handover process of the terminal device for the PDU set; and performing a handover operation based on the first indication information. In this way, during inter-base-station handover, a waste of resources caused by a mismatch between capabilities of the base stations during buffered data forwarding can be avoided, thereby improving forwarding efficiency.

## Description

This application claims priority to Chinese Patent Application No. 202311015533.2, filed with the China National Intellectual Property Administration on August 10, 2023 and entitled "DATA TRANSMISSION METHOD AND APPARATUS", which is incorporated herein by reference in its entirety.

### TECHNICAL FIELD

This application relates to the communication field, and more specifically, to a data transmission method and apparatus.

### BACKGROUND

With continuous development of communication technologies, extended reality (eXtended reality, XR) is one of 5G multimedia applications that are currently considered as key issues in the industry field.

A 5G system forwards and processes data at a granularity of a quality of service flow (quality of service flow, QoS flow), and guarantees quality of service (quality of service, QoS) of the data. A 5G core network (5G core network, 5GC) in the 5G system indicates QoS requirements of different QoS flows to a radio access network (radio access network, RAN) by using a QoS profile (QoS profile). For a common service in the 5G system, a QoS guarantee is required only at a granularity of a protocol data unit (protocol data unit, PDU). However, for an XR service, a QoS guarantee is usually expected to be required at a granularity of a PDU set (PDU set). For the XR service, a base station usually needs to have a processing capability for the PDU set. Therefore, the base station reports the processing capability of the base station for the PDU set to the core network.

When a terminal device undergoes inter-base-station handover, how to avoid a waste of resources caused by a mismatch between capabilities of a source base station and a target base station in a handover process becomes an urgent problem to be resolved.

### SUMMARY

This application provides a data transmission method and apparatus, so that during inter-base-station handover, a waste of resources caused by a mismatch between capabilities of base stations during buffered data forwarding can be avoided, thereby improving forwarding efficiency.

According to a first aspect, a data transmission method is provided. The method is applied to a source base station in a handover process of a terminal device. The method includes: sending a first handover request, where the first handover request includes a quality of service QoS parameter for a protocol data unit PDU set of the terminal device; receiving first indication information, where the first indication information indicates a processing capability of a target base station in the handover process of the terminal device for the PDU set; and performing a handover operation based on the first indication information.

In the foregoing technical solution, the source base station fully considers the processing capability of the target base station for the PDU set, and makes a proper handover decision, to avoid a waste of link resources and even a data decoding error caused by a mismatch between processing capabilities of the two base stations for the PDU set.

With reference to the first aspect, in some implementations of the first aspect, the QoS parameter includes one or more of a protocol data unit set delay budget PSDB, a protocol data unit set error rate PSER, and protocol data unit set integrated information PSIHI.

With reference to the first aspect, in some implementations of the first aspect, the performing the handover operation based on the first indication information includes: when the first indication information indicates that the target base station has the processing capability for the PDU set, sending a first buffered data packet, where the first buffered data packet includes related information of the PDU set.

In the foregoing technical solution, when the first indication information indicates that the target base station has the processing capability for the PDU set, the source base station directly forwards the to-be-forwarded buffered data to the target base station. Compared with a case in which the source base station directly forwards the buffered data to the target base station when the capability of the target base station is unknown, in the solution of this application, it can be ensured that no link resource is wasted during buffered data forwarding.

With reference to the first aspect, in some implementations of the first aspect, the performing the handover operation based on the first indication information includes: when the first indication information indicates that the target base station does not have the processing capability for the PDU set, sending a second buffered data packet, where the second buffered data packet does not include related information of the PDU set; or determining a new target base station; or sending a second handover request to the target base station, where the second handover request does not include the QoS parameter for the PDU set.

In the foregoing technical solution, when the first indication information indicates that the target base station does not have the processing capability for the PDU set, the source base station removes the related information of the PDU set from the data packet of the to-be-forwarded buffered data, so that a size of a packet header of the to-be-forwarded data is reduced while an inter-base-station handover process between the source base station and the target base station remains unchanged, thereby reducing consumption of forwarding link resources. Alternatively, when the first indication information indicates that the target base station does not have the processing capability for the PDU set, a more appropriate new target base station is found, so that capabilities of two base stations that perform inter-base-station handover can match, to ensure that a PDU set-based QoS guarantee is needed, and is more suitable for a PDU set-based data transmission process. Alternatively, when the first indication information indicates that the target base station does not have the processing capability for the PDU set, inter-base-station handover between the source base station and the target base station may continue to be implemented, thereby avoiding a problem that a service is interrupted because the terminal cannot be handed over in a timely manner. In addition, a size of a packet header of the to-be-forwarded data is reduced, thereby reducing consumption of forwarding link resources.

According to a second aspect, a data transmission method is provided. The method is applied to a source base station of a terminal device. The method includes: sending a first capability query message, where the first capability query message is used to query for a processing capability of at least one candidate base station for a protocol data unit PDU set, and the at least one candidate base station is to be used in a handover process of the terminal device; receiving second indication information, where the second indication information indicates the processing capability of the at least one candidate base station for the PDU set; and performing a handover operation based on the second indication information.

With reference to the second aspect, in some implementations of the second aspect, the performing the handover operation based on the second indication information includes: determining a candidate base station that has the processing capability for the PDU set indicated by the second indication information as a target base station in the handover process of the terminal device.

In the foregoing technical solution, the processing capability of the at least one candidate base station for the PDU set is learned of, and during inter-base-station handover, a candidate base station having a processing capability for the PDU set is used as the target base station, so that a PDU set-based QoS requirement of the terminal device can be guaranteed.

With reference to the second aspect, in some implementations of the second aspect, the performing the handover operation based on the second indication information includes: when one of the at least one candidate base station is determined as a target base station in the handover process of the terminal device, if the target base station does not have the processing capability for the PDU set, sending third buffered data, where the third buffered data does not include related information of the PDU set.

In the foregoing technical solution, even if there is no base station having a processing capability for the PDU set in candidate base stations around the source base station, an appropriate inter-base-station handover policy may be determined in advance, to improve data forwarding efficiency and avoid a waste of resources.

According to a third aspect, a data transmission method is provided. The method is applied to a source base station in a handover process of a terminal device. The method includes: sending a fourth handover request, where the fourth handover request includes a quality of service QoS parameter for a PDU set; receiving a second feedback message; determining, based on the second feedback message, that a target base station in a handover process of a terminal device is an old-version base station, where the old-version base station does not have a processing capability for the protocol data unit PDU set; and performing a second operation.

It should be understood that the old-version base station may be an old base station below.

In the foregoing technical solution, based on the second feedback message not including indication information of the processing capability of the target base station for the PDU set, it may be determined that the target base station is an old base station, namely, an old-version base station. In this way, in an inter-base-station handover process, a data transmission policy that is more suitable for the old base station is determined, thereby improving data forwarding efficiency, and avoiding a waste of resources.

With reference to the third aspect, in some implementations of the third aspect, the QoS parameter includes one or more of a protocol data unit set delay budget PSDB, a protocol data unit set error rate PSER, and protocol data unit set integrated information PSIHI.

With reference to the third aspect, in some implementations of the third aspect, the performing the second operation includes: sending a fourth buffered data packet, where the fourth buffered data packet does not include related information of the PDU set; or determining a new target base station; or sending a fifth handover request to the target base station, where the fifth handover request does not include the QoS parameter for the PDU set.

In the foregoing technical solution, when the target base station is an old base station that is not upgraded, namely, an old-version base station, inter-base-station handover between the source base station and the old base station may continue to be implemented, thereby avoiding a problem that a service is interrupted because the terminal cannot be handed over in a timely manner. In addition, a size of a packet header of the to-be-forwarded data is reduced, thereby reducing consumption of forwarding link resources.

According to a fourth aspect, a data transmission method is provided. The method is applied to a first base station. The method includes: determining third indication information, where the third indication information indicates capability information of the first base station for a low-latency, low-loss and scalable throughput L4S mechanism; and sending the third indication information to a core network when a trigger condition is met.

In the foregoing technical solution, the first base station may notify, in a timely manner, the core network of a status of supporting the L4S by the first base station, so that the core network learns of a capability of the first base station, and selects an appropriate manner when there is an L4S requirement. This helps adjust a sending rate of a service in a timely manner, and improve user experience. For example, if the first base station supports only ECN marking but does not support congestion reporting, the core network may indicate the first base station to perform ECN marking. However, if the first base station supports only congestion reporting but does not support ECN marking, the core network may indicate the first base station to perform congestion reporting, and the core network is responsible for ECN marking, so as to ensure proper functioning of the L4S.

With reference to the fourth aspect, in some implementations of the fourth aspect, the third indication information indicates whether the first base station has both an explicit congestion notification ECN marking capability and a congestion information reporting capability.

With reference to the fourth aspect, in some implementations of the fourth aspect, the third indication information indicates whether the first base station has an ECN marking capability and/or whether the first base station has a congestion information reporting capability.

With reference to the fourth aspect, in some implementations of the fourth aspect, the third indication information indicates whether the first base station has an ECN marking capability or a congestion information reporting capability.

With reference to the fourth aspect, in some implementations of the fourth aspect, before the determining the third indication information, the method further includes: receiving a first capability reporting request, where the first capability reporting request is used to request the capability information of the first base station for the L4S mechanism; and the sending the third indication information when the trigger condition is met includes: sending the third indication information in response to the first capability reporting request.

In the foregoing technical solution, the third indication information is triggered by using the capability reporting request, so that the core network can obtain the capability of the base station for the L4S mechanism in a timely manner. This helps determine a more proper data transmission policy.

With reference to the fourth aspect, in some implementations of the fourth aspect, before the determining the third indication information, the method further includes: receiving a first start message, where the first start message indicates the first base station to mark an ECN and/or start a congestion information reporting operation; and the sending the third indication information when the trigger condition is met includes: sending the third indication information when the first base station has or does not have the ECN marking capability and/or the congestion information reporting capability.

In the foregoing technical solution, the start message is used to trigger the base station to report the third indication information to the core network, so that when determining that the first base station needs to have the capability for the L4S mechanism, the core network may obtain the capability of the first base station through less information exchange.

With reference to the fourth aspect, in some implementations of the fourth aspect, before the determining the third indication information, the method further includes: receiving first data, where the first data includes a quality of service QoS flow for the L4S mechanism; and the sending the third indication information when the trigger condition is met includes: sending the third indication information after the first data is received.

In the foregoing technical solution, the data includes the QoS flow for the L4S mechanism, to trigger the base station to actively report the third indication information, so that the core network can obtain the capability of the first base station through less information exchange.

With reference to the fourth aspect, in some implementations of the fourth aspect, before the determining the third indication information, the method further includes: receiving a second start message, where the second start message indicates the first base station to mark an ECN and/or start a congestion information reporting operation; and the sending the third indication information when the trigger condition is met includes: sending the third indication information in response to the second start message.

In some implementations, the second start information indicates the first base station to mark an ECN and/or start a congestion information reporting operation for an uplink data flow or a downlink data flow of a first QoS flow or a first DRB in a terminal device.

It should be understood that the first QoS flow is any QoS flow in the terminal device, and the first DRB is any DRB in the terminal device.

In some implementations, the second start information indicates that the second base station has marked or is marking an ECN and/or has performed or is performing a congestion information reporting operation for an uplink data flow or a downlink data flow of a second QoS flow or a second DRB in a terminal device.

It should be understood that the second QoS flow is any QoS flow in the terminal device, and the second DRB is any DRB in the terminal device.

In some implementations, the second start information is carried in a third handover request, and the third handover request is used to request the terminal device to be handed over from the second base station to the first base station.

In the foregoing technical solution, during inter-base-station handover, the first base station is triggered to report the capability for the L4S mechanism. This helps ensure that when the terminal device is handed over from the second base station to the first base station, data transmission of the terminal device can continue to be performed in a transmission manner for the L4S mechanism.

In some implementations, the second start information is carried in a first response message, the first response message is in response to a terminal device context query request message sent by the first base station to the second base station, and the first response message indicates a context of the terminal device to the first base station. It should be understood that before receiving the first response message, the first base station sends the terminal device context query request message to the second base station, where the context query request message is used to query for the context of the terminal device.

With reference to the fourth aspect, in some implementations of the fourth aspect, the method further includes: no longer sending the third indication information within first duration, where a start moment of the first duration is each sending completion of the third indication information.

In the foregoing technical solution, sending frequency of the third indication information is limited by presetting the duration, to avoid two extreme sending manners, namely, frequently sending the third indication information and sending the third indication information once. In this way, capability reporting frequency can be reduced, and timeliness and accuracy of capability reporting can be ensured.

According to a fifth aspect, a data transmission apparatus is provided. The apparatus includes a transceiver unit and a processing unit. The transceiver unit is configured to send a first handover request, where the first handover request includes a quality of service QoS parameter for a protocol data unit PDU set of a terminal device. The transceiver unit is configured to receive first indication information, where the first indication information indicates a processing capability of a target base station for the PDU set in a handover process of the terminal device. The processing unit is configured to perform a handover operation based on the first indication information.

It should be understood that beneficial effects corresponding to the solution in the fifth aspect are similar to those in the first aspect. Details are not described herein again.

With reference to the fifth aspect, in some implementations of the fifth aspect, the QoS parameter includes one or more of a protocol data unit set delay budget PSDB, a protocol data unit set error rate PSER, and protocol data unit set integrated information PSIHI.

With reference to the fifth aspect, in some implementations of the fifth aspect, the processing unit is specifically configured to: when the first indication information indicates that the target base station has the processing capability for the PDU set, control the transceiver unit to send a first buffered data packet, where the first buffered data packet includes related information of the PDU set.

With reference to the fifth aspect, in some implementations of the fifth aspect, the processing unit is specifically configured to: when the first indication information indicates that the target base station does not have the processing capability for the PDU set, control the transceiver unit to send a second buffered data packet, where the second buffered data packet does not include related information of the PDU set; or determine a new target base station; or control the transceiver unit to send a second handover request to the target base station, where the second handover request does not include the QoS parameter for the PDU set.

According to a sixth aspect, a data transmission apparatus is provided. The apparatus includes a transceiver unit and a processing unit. The transceiver unit is configured to send a first capability query message, where the first capability query message is used to query for a processing capability of at least one candidate base station for a protocol data unit PDU set, and the at least one candidate base station is to be used in a handover process of a terminal device. The transceiver unit is configured to receive second indication information, where the second indication information indicates the processing capability of the at least one candidate base station for the PDU set. The processing unit is configured to perform a handover operation based on the second indication information.

It should be understood that beneficial effects corresponding to the solution in the sixth aspect are similar to those in the second aspect. Details are not described herein again.

With reference to the sixth aspect, in some implementations of the sixth aspect, the processing unit is specifically configured to determine a candidate base station that has the processing capability for the PDU set indicated by the second indication information as a target base station in the handover process of the terminal device.

With reference to the sixth aspect, in some implementations of the sixth aspect, the processing unit is specifically configured to: when one of the at least one candidate base station is determined as a target base station in the handover process of the terminal device, if the target base station does not have the processing capability for the PDU set, control the transceiver unit to send third buffered data, where the third buffered data does not include related information of the PDU set.

According to a seventh aspect, a data transmission apparatus is provided. The apparatus includes a transceiver unit and a processing unit. The transceiver unit is configured to send a fourth handover request, where the fourth handover request includes a quality of service QoS parameter for a PDU set. The transceiver unit is configured to receive a second feedback message. The processing unit is configured to determine, based on the second feedback message, that a target base station in a handover process of a terminal device is an old base station, where the old base station does not have a processing capability for the protocol data unit PDU set. The processing unit is configured to perform a second operation.

It should be understood that beneficial effects corresponding to the solution in the seventh aspect are similar to those in the third aspect. Details are not described herein again.

With reference to the seventh aspect, in some implementations of the seventh aspect, the QoS parameter includes one or more of a protocol data unit set delay budget PSDB, a protocol data unit set error rate PSER, and protocol data unit set integrated information PSIHI.

With reference to the seventh aspect, in some implementations of the seventh aspect, the processing unit is specifically configured to: control the transceiver unit to send a fourth buffered data packet, where the fourth buffered data packet does not include related information of the PDU set; or determine a new target base station; or control the transceiver unit to send a fifth handover request to the target base station, where the fifth handover request does not include the QoS parameter for the PDU set.

According to an eighth aspect, a data transmission apparatus is provided. The apparatus includes a processing unit and a transceiver unit. The processing unit is configured to determine third indication information, where the third indication information indicates capability information of a first base station for a low-latency, low-loss and scalable throughput L4S mechanism; and the transceiver unit is configured to send the third indication information to a core network when a trigger condition is met.

It should be understood that beneficial effects corresponding to the solution in the eighth aspect are similar to those in the fourth aspect. Details are not described herein again.

With reference to the eighth aspect, in some implementations of the eighth aspect, the third indication information indicates whether the first base station has both an explicit congestion notification ECN marking capability and a congestion information reporting capability.

With reference to the eighth aspect, in some implementations of the eighth aspect, the third indication information indicates whether the first base station has an ECN marking capability and/or whether the first base station has a congestion information reporting capability.

With reference to the eighth aspect, in some implementations of the eighth aspect, the third indication information indicates whether the first base station has an ECN marking capability or a congestion information reporting capability.

With reference to the eighth aspect, in some implementations of the eighth aspect, before the processing unit is configured to determine the third indication information, the transceiver unit is further configured to receive a first capability reporting request, where the first capability reporting request is used to request the capability information of the first base station for the L4S mechanism. The transceiver unit is specifically configured to send the third indication information in response to the first capability reporting request.

With reference to the eighth aspect, in some implementations of the eighth aspect, before the processing unit is configured to determine the third indication information, the transceiver unit is further configured to receive a first start message, where the first start message indicates the first base station to mark an ECN and/or start a congestion information reporting operation. The transceiver unit is specifically configured to send the third indication information when the first base station has or does not have the ECN marking capability and/or the congestion information reporting capability.

With reference to the eighth aspect, in some implementations of the eighth aspect, before the processing unit is configured to determine the third indication information, the transceiver unit is further configured to receive first data, where the first data includes a quality of service QoS flow for the L4S mechanism. The processing unit is specifically configured to control, after receiving the first data, the transceiver unit to send the third indication information.

With reference to the eighth aspect, in some implementations of the eighth aspect, before the processing unit is configured to determine the third indication information, the transceiver unit is further configured to receive a second start message, where the second start message indicates the first base station to mark an ECN and/or start a congestion information reporting operation. The transceiver unit is specifically configured to send the third indication information in response to the second start message.

In some implementations, the second start information indicates the first base station to mark an ECN and/or start a congestion information reporting operation for an uplink data flow or a downlink data flow of a first QoS flow or a first DRB in a terminal device.

It should be understood that the first QoS flow is any QoS flow in the terminal device, and the first DRB is any DRB in the terminal device.

In some implementations, the second start information indicates that the second base station has marked or is marking an ECN and/or has performed or is performing a congestion information reporting operation for an uplink data flow or a downlink data flow of a second QoS flow or a second DRB in a terminal device.

It should be understood that the second QoS flow is any QoS flow in the terminal device, and the second DRB is any DRB in the terminal device.

In some implementations, the second start information is carried in a third handover request, and the third handover request is used to request the terminal device to be handed over from the second base station to the first base station.

In some implementations, the second start information is carried in a first response message, the first response message is in response to a terminal device context query request message sent by the first base station to the second base station, and the first response message indicates a context of the terminal device to the first base station. It should be understood that before receiving the first response message, the first base station sends the terminal device context query request message to the second base station, where the context query request message is used to query for the context of the terminal device.

With reference to the eighth aspect, in some implementations of the eighth aspect, the method further includes: no longer sending the third indication information within first duration, where a start moment of the first duration is each sending completion of the third indication information.

According to a ninth aspect, a data transmission apparatus is provided. The apparatus includes: a memory, configured to store a program; and a processor, configured to execute a computer program or instructions stored in the memory. When the computer program or the instructions stored in the memory are executed, the processor is configured to perform the method according to any one of the implementations of the first aspect or the fifth aspect.

In an implementation, the apparatus is a source base station in a handover process of a terminal device.

In another implementation, the apparatus is a chip, a chip system, or a circuit in a source base station in a handover process of a terminal device.

According to a tenth aspect, this application provides a processor, configured to perform the method according to any one of the implementations of the first aspect to the fourth aspect. In a process of performing the methods, a process of sending the information and a process of obtaining/receiving the information in the foregoing methods may be understood as a process of outputting the information by the processor and a process of receiving the inputted information by the processor. When outputting the foregoing information, the processor outputs the foregoing information to an interface, and transmits the information through the interface. After the foregoing information is output by the processor, other processing may further need to be performed on the information before the information arrives at the interface. Similarly, when the processor receives the foregoing input information, the interface obtains/receives the foregoing information, and inputs the foregoing information into the processor. Further, after the interface receives the foregoing information, other processing may need to be performed on the foregoing information before the foregoing information is input into the processor.

Unless otherwise specified, or if operations such as related transmitting, sending, and obtaining/receiving do not conflict with actual functions or internal logic in related descriptions, the operations may be understood as operations such as outputting, receiving, and inputting, or may be understood as transmitting, sending and receiving operations performed by a radio frequency circuit and an antenna. This is not limited in this application.

In an implementation process, the processor may be a processor specially configured to perform these methods, or a processor, for example, a general-purpose processor, that executes a computer program or instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to an eleventh aspect, a computer-readable storage medium is provided. The computer-readable medium stores program code to be executed by a device, and the program code is for performing the method according to any one of the implementations of the first aspect to the fourth aspect.

According to a twelfth aspect, a computer program product including instructions is provided. When the computer program product is run on a computer, the computer is caused to perform the method according to any one of the implementations of the first aspect to the fourth aspect.

According to a thirteenth aspect, a chip is provided. The chip includes a processor and a communication interface, and the processor reads, through the communication interface, instructions stored in a memory, to perform the method according to any one of the implementations of the first aspect to the fourth aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the implementations of the first aspect to the fourth aspect.

### BRIEF DESCRIPTION OF DRAWINGS

FIG. 1 is a diagram of a communication system according to an embodiment of this application;
FIG. 2 is a diagram of a QoS architecture-based 5G system according to an embodiment of this application;
FIG. 3 is a schematic flowchart of inter-base-station handover according to an embodiment of this application;
FIG. 4 is a schematic flowchart of inter-base-station handover in an XR service according to an embodiment of this application;
FIG. 5 is a schematic flowchart of a data transmission method according to an embodiment of this application;
FIG. 6 is a schematic flowchart of another data transmission method according to an embodiment of this application;
FIG. 7 is a schematic flowchart of still another data transmission method according to an embodiment of this application;
FIG. 8 is a schematic flowchart of behaviors of a target base station according to an embodiment of this application;
FIG. 9 is a schematic flowchart of behaviors of a source base station according to an embodiment of this application;
FIG. 10 is a schematic flowchart of yet another data transmission method according to an embodiment of this application;
FIG. 11 is a schematic flowchart of yet another data transmission method according to an embodiment of this application;
FIG. 12 is a diagram of an operating mode of an L4S mechanism according to an embodiment of this application;
FIG. 13 is a schematic flowchart of yet another data transmission method according to an embodiment of this application;
FIG. 14 is a diagram of a data transmission apparatus 1400 according to an embodiment of this application;
FIG. 15 is a diagram of a structure of a data transmission apparatus 1500 according to an embodiment of this application; and
FIG. 16 is a diagram of a chip system 1600 according to an embodiment of this application.

### DESCRIPTION OF EMBODIMENTS

Technical solutions of this application are described below with reference to the accompanying drawings.

The technical solutions of embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system or a new radio (New Radio, NR) system, and a future evolved communication system.

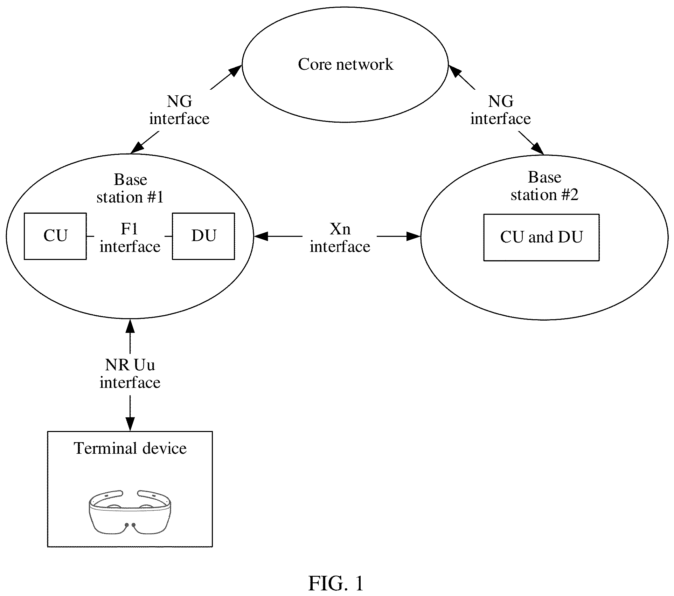

FIG. 1 is a diagram of a communication system according to an embodiment of this application.

As shown in FIG. 1, a communication system to which the solutions in embodiments of this application are applied may include access network devices, a terminal device, and a core network. The communication system may be used for information exchange between the access network devices and the core network, or may be used for information exchange between the access network devices. For example, as shown in FIG. 1, an access network device #1 and an access network device #2 each may communicate with the core network through an NG interface. The access network device #1 and the access network device #2 may directly communicate with each other through an Xn interface, or the access network device #1 and the access network device #2 may indirectly communicate with each other over the core network through the NG interfaces.

The terminal device is also referred to as user equipment (user equipment, UE), a mobile station (mobile station, MS), a mobile terminal (mobile terminal, MT), or the like, and is a device that provides a user with voice and/or data connectivity. For example, the terminal device may be a mobile phone (mobile phone), a tablet computer (Pad), a computer having a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), an uncrewed aerial vehicle, an uncrewed aerial vehicle controller, or the like. An application scenario is not limited in embodiments of this application. The terminal device also includes a device that can perform sidelink (sidelink) communication, for example, a vehicle-mounted terminal, or a handheld terminal that can perform V2X (vehicle-to-everything, vehicle-to-everything) communication.

The access network device is a radio access network (radio access network, RAN) node (or device) that connects a terminal to a wireless network, and may also be referred to as a base station. For example, the access network device may be various types of base stations such as an NR gNB or an LTE eNB. For ease of description, the "access network devices" are collectively referred to as a "base station" in embodiments of this application. The NR gNB may be of an architecture in which a central unit (central unit, CU) and a distributed unit (distributed unit, DU) are separated. For example, in the base station #1 shown in FIG. 1, a CU and a DU are connected through an F1 interface for message transmission. Alternatively, an architecture in which a CU and a DU are separated may not be used in the NR gNB, for example, the base station #2 shown in FIG. 1. This is not limited in this embodiment of this application. In a separate deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) layer protocol, a media access control (media access control, MAC) layer protocol, and a physical layer protocol. Generally, the terminal device maintains a data connection to only one base station at a same moment. In a dual connectivity (Dual Connectivity, DC) scenario, the terminal device may be connected to two base stations at a same moment. One base station serves as a control anchor, provides a control plane connection and a user plane connection for the terminal, and is referred to as a primary base station. The other base station provides only a user plane connection for the terminal, and is referred to as a secondary base station. This application may be applied to the DC scenario, or may not be applied to the DC scenario.

A core network device is a device in a core network (core network, CN) that provides service support for the terminal. Currently, some examples of the core network device are an access and mobility management function (access and mobility management function, AMF) entity, a session management function (session management function, SMF) entity, a user plane function (user plane function, UPF) entity, and the like, which are not enumerated herein. The AMF entity may be responsible for access management and mobility management of the terminal. The SMF entity may be responsible for session management, for example, user session establishment. The UPF entity may be a functional entity on a user plane, and is mainly responsible for a connection to an external network. It should be noted that, an entity in this application may also be referred to as a network element or a functional entity. For example, the AMF entity may also be referred to as an AMF network element or an AMF functional entity. For another example, the SMF entity may also be referred to as an SMF network element or an SMF functional entity.

To facilitate understanding of the solutions in embodiments of this application, technical terms in embodiments of this application are described in detail below.

### 1. PDU set (PDU set)

The PDU set is a set of a plurality of data packets at a transport layer, corresponding to a minimum granularity for data processing at an application layer. In some application scenarios, only after correctly receiving all the data packets in the PDU set, the application layer can correctly obtain a corresponding data unit through parsing. In some other application scenarios, the application layer can parse a corresponding data unit after correctly receiving a specific proportion of data packets in the PDU set.

### 2. XR service

Extended reality (eXtended Reality, XR) refers to various virtual-reality combined environments and human-machine interaction that are generated by wearable devices by using computing technologies. XR specifically includes the following typical forms: AR, VR, and mixed reality (Mixed Reality, MR).

The 3rd generation partnership project (3rd generation partnership project, 3GPP) Rel-17 conducts modeling and analysis on XR service characteristics. Generally, an XR service periodically generates data frames at a specific frame rate. An AR service with a frame rate of 60 fps (frames per second, frames per second) is used as an example. 60 frames of video images are generated per second, and one video frame appears about every 16.67 ms. One video frame may be transmitted by using a plurality of data packets, and the plurality of data packets may be divided into one or more PDU sets.

### 3. Quality of service (QoS)

Quality of service is a technology for resolving problems such as network delay and congestion. When a network is congested, data may be discarded. To meet users' different QoS requirements for different applications, the network needs to allocate and schedule resources as required and provide different QoS for different data.

### 4. QoS flow (QoS flow)

A 5G system forwards and processes data at a granularity of a QoS flow and guarantees QoS of the data.

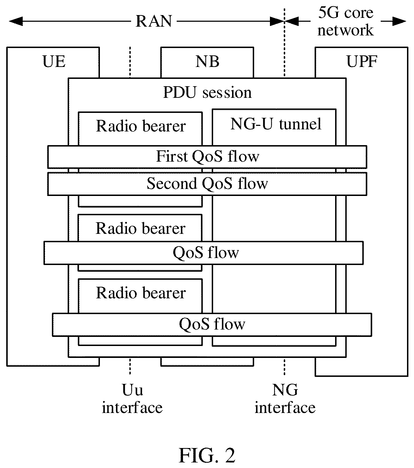

A 5G core network establishes one or more protocol data unit sessions (protocol data unit sessions, PDU sessions) for UE. A QoS flow is data flows that have same source and destination addresses and have a same QoS requirement in a PDU session. FIG. 2 is a diagram of a QoS architecture-based 5G system according to an embodiment of this application. As shown in FIG. 2, a PDU session is established between UE and a UPF, there is a radio bearer between the UE and an NB, and there is a core network tunnel between the NB and the UPF. The PDU session includes a plurality of QoS flows, and the plurality of QoS flows include a first QoS flow, a second QoS flow, and the like.

For a downlink, the 5GC identifies a characteristic of a data packet, including a source internet protocol (internet protocol, IP) address, a destination IP address, a source port number, a destination port number, and a transport layer protocol number of the data packet, and maps data packets with a same characteristic to a same QoS flow, and a QoS flow identity (QoS flow ID, QFI) is carried in a data packet header to identify a specific QoS flow to which the data packet belongs. For an uplink, the 5GC may explicitly or implicitly configure a mapping relationship between the characteristic of the data packet and the QoS flow for the UE, and the UE maps to-be-transmitted uplink data to different QoS flows.

Data in different QoS flows is transmitted independently in the 5G system. For each QoS flow, the 5GC sends a QoS profile (QoS profile) of the QoS flow to a radio access network (radio access network, RAN), to indicate a QoS requirement of the QoS flow, for example, a packet delay budget (packet delay budget, PDB) and a packet error rate (packet error rate, PER), so as to indicate quality of service expected to be achieved during transmission of data in the QoS flow in the 5G system. The PDB indicates an upper limit of a transmission delay of a data packet between the core network and the UE. A data packet that fails to be correctly transmitted within the PDB is considered to time out. The PER indicates an upper limit of the packet error rate during QoS flow transmission, that is, a percentage of data packets that are processed by a transmit end but are not correctly received by a receive end. A downlink behavior between the core network and the UE may be understood as starting from a UPF of the core network to the UE, and an uplink behavior between the core network and the UE may be understood as starting from the UE to the UPF of the core network.

For a PDU session, the RAN establishes one or more data radio bearers (data radio bearers, DRBs) for the PDU session, and maps each QoS flow to these DRBs for air interface transmission. A plurality of QoS flows can be mapped to one DRB, but one QoS flow cannot be mapped to a plurality of DRBs. QoS flows with a same QoS requirement or similar QoS requirements are usually mapped to a same DRB, to provide a same QoS guarantee on an air interface.

### 5. QoS parameter for a PDU

The 5GC indicates QoS requirements of different QoS flows to the RAN by using the QoS profile, and these requirements are reflected by QoS parameters. For example, common QoS parameters include the PDB and the PER. A transport network needs to try the best to ensure that a QoS requirement of a service is met, so as to ensure user experience.

### 6. QoS parameter for the PDU set

For the XR service, a QoS guarantee is usually expected to be required at a granularity of a PDU set, which depends on an encoding scheme of the XR service. Because one PDU set corresponds to a minimum unit of data processing by the application layer, for example, a video frame, for many applications, only when all data packets in the PDU set are correctly received, the receive side can successfully obtain a video frame through decoding. Therefore, for the XR service, the transport network needs to provide an overall QoS guarantee for the PDU set, to avoid a failure of decoding an entire video frame due to timeout or an error of some data packets in the PDU set.

In 3GPP R18 (Release 18), a new QoS parameter is designed for the XR service, which is referred to as a QoS parameter for the PDU set, including a PDU set delay budget (PDU set delay budget, PSDB), a PDU set error rate (PDU set error rate, PSER), and PDU set integrated information (PDU set integrated information, PSIHI). The PSDB and PSER respectively correspond to the conventional PDB and the conventional PER. The PSDB indicates an upper limit of a delay from transmission start of a 1^{st} data packet in the PDU set between the core network and the UE to transmission completion of a last data packet in the PDU set between the core network and the UE, that is, an upper limit of a delay of transmission of the PDU set between the core network and the UE. A PDU set that is not fully and correctly transmitted within the PSDB is considered to time out. The PSER indicates an upper limit of a percentage of a quantity of PDU sets that fail to be correctly transmitted during QoS flow transmission, that is, an upper limit of a percentage of PDU sets that are processed by the transmit end but are not correctly received by the receive end. The PSIHI is a description of whether a QoS flow requires integrity of the PDU set. It indicates whether the application layer requires the receive side to correctly receive all data packets in the PDU set when the PDU set is processed by the application layer. This is related to a specific implementation of an application.

In an implementation, the application can correctly decode the PDU set only after correctly receiving all the data packets in the PDU set. In this case, when transmitting the PDU set, the transport network needs to try the best to ensure that all the data packets in the PDU set are correctly transmitted within the delay budget. This is because once a data packet times out or is lost, the application layer of the receive end cannot process the PDU set in a timely manner, degrading user experience. If it has been determined that a data packet in the PDU set cannot be correctly transmitted in a timely manner, the transmit side may also abandon transmission of the remaining data packets. This is because, the application cannot process the remaining data packets even if the remaining data packets are correctly transmitted, and actively abandoning the remaining data packets can save network resources. In another implementation, the application can decode the PDU set without correctly receiving all the data packets in the PDU set. For example, when redundancy coding processing is performed on the PDU set on the transmit side, the receive side can completely restore data of the PDU set as long as the receive end receives a specific quantity or percentage of data packets. In this case, even if some data packets in the PDU set have timed out or have been lost, the transmit side should continue to transmit the remaining data packets. This is because the remaining data packets are still useful for the application layer.

By using the QoS parameter for the PDU set, the core network requires the RAN to provide a QoS guarantee at a granularity of a PDU set for a PDU set-based QoS flow (for example, the XR service), to improve XR user satisfaction.

### 7. Inter-base-station handover (handover)

In a mobile communication system, in a process in which the UE obtains a service from a 5G network, a serving cell may need to be changed as a location changes. A process in which the UE in a connected state changes the serving cell is referred to as handover. The handover process is controlled by a base station, that is, the base station sends a handover message to indicate the UE to be handed over to a specific cell at a specific moment. Generally, the base station determines, based on signal quality that each cell can provide for the UE, whether to perform handover and a specific cell to which the UE is to be handed over.

When a source cell (that is, a cell in which the UE is originally located) and a target cell (that is, a cell to which the UE is to be handed over) are located in different base stations, such handover is referred to as inter-base-station handover. Based on a type of an interface between a source base station and a target base station, handover may be further classified into Xn handover and NG handover.

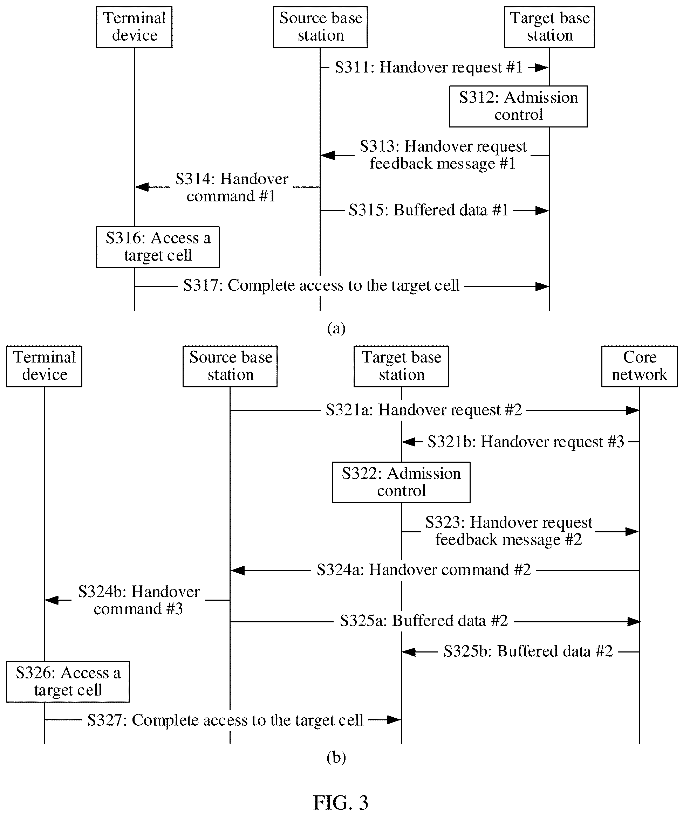

FIG. 3 is a schematic flowchart of inter-base-station handover according to an embodiment of this application.

As shown in (a) in FIG. 3, when there is an Xn interface between a source base station and a target base station, Xn interface-based handover may be performed.

S311: The source base station sends a handover request (HANDOVER REQUEST) #1 to the target base station.

The handover request #1 indicates that UE expects to be handed over to a target cell. The handover request carries configuration requirement information of the UE, for example, information such as a PDU session and a QoS flow that are established for the UE, and a QoS requirement of the QoS flow.

S312: The target base station performs admission control based on cell load, a capability, and the like, and determines a handover request feedback message #1.

The handover request feedback message #1 indicates whether UE handover is admitted, and indicates a specific PDU session or QoS flow that is of the UE and that is admitted.

It should be understood that, when the target base station agrees to the handover request #1, a type of the handover request feedback message #1 is a handover request acknowledge (HANDOVER REQUEST ACKNOWLEDGE) message. When the target base station does not agree to the handover request #1, a type of the handover request feedback message #1 is a handover preparation failure (HANDOVER PREPARATION FAILURE) message.

S313: The target base station sends the handover request feedback message #1 to the source base station.

S314: When the target base station admits the UE handover, the source base station sends a handover command #1 to the UE. The handover command #1 is used to instruct the UE to access the target cell.

S315: The source base station no longer performs data transmission with the UE, and sends buffered data #1 to the target base station.

The buffered data #1 is data that has been already buffered in the source base station and that is originally intended to be sent to the UE.

S316: The UE performs handover after receiving the instruction, and successfully accesses the target cell.

S317: The terminal device and the target base station complete access to the target cell.

In other words, the terminal device continues to perform data transmission in the target cell. To be specific, a core network sends subsequent downlink data to the UE via the target base station, and uplink data of the UE is also sent to the core network via the target base station.

As shown in (b) in FIG. 3, when there is no Xn interface between a source base station and a target base station, a handover request and an acknowledge message cannot be directly transmitted between the base stations. In this case, NG interface-based handover needs to be performed, and the messages are forwarded via a core network.

S321a: The source base station sends a handover request #2 to the core network. S321b: The core network sends a handover request #3 to the target base station.

Functions and effects of the handover request #2 and the handover request #3 are similar to those of the handover request #1. Details are not described herein again.

S322: The target base station performs admission control based on cell load, a capability, and the like, and determines a handover request feedback message #2.

A function of the handover request feedback message #2 is similar to that of the handover request feedback message #1. Details are not described herein again.

S323: The target base station sends the handover request feedback message #2 to the core network.

S324a: When the target base station admits UE handover, the core network sends a handover command #2 to the source base station. S324b: The source base station sends a handover command #3 to a terminal device.

The handover command #2 is used to instruct the source base station to continue a handover operation, and the handover command #3 is used to instruct the UE to be handed over to a target cell.

S325a: The source base station no longer performs data transmission with the UE, and sends buffered data #2 to the core network. S325b: The core network sends the buffered data #2 to the target base station.

The buffered data #2 is data that has been already buffered in the source base station and that is originally intended to be sent to the UE.

S326: The UE performs handover after receiving the instruction, and successfully accesses the target cell.

S327: The terminal device and the target base station complete access to the target cell.

In other words, the terminal device continues to perform data transmission in the target cell. To be specific, the core network sends subsequent downlink data to the UE via the target base station, and uplink data of the UE is also sent to the core network via the target base station.

It should be understood that, for a method for information transmission between the source base station and the target base station, direct communication between the source base station and the target base station may be implemented through the Xn interface, or indirect communication between the source base station and the target base station may be implemented through forwarding via the core network through NG interfaces.

Currently, because for an XR service, a QoS requirement guarantee is required at a granularity of a PDU set, a corresponding base station needs to support PDU set-based data processing and forwarding. Further, during downlink transmission, when a QoS flow requires a PDU set-based QoS guarantee, and the base station supports PDU set processing, the core network adds related information of the PDU set to a packet header of each data packet when transmitting data packets to the base station. The related information may be a parameter that identifies the PDU set or reflects an attribute of the PDU set, for example, a PDU set sequence number, a PDU sequence number within the PDU set, a PDU set size, or PDU set importance. In this way, the base station can distinguish between PDU sets to which different data packets belong. If the base station does not support PDU set processing, the core network does not need to add the information. Therefore, the core network needs to know capability information indicating whether the base station supports PDU set processing.

Specifically, if a QoS profile of the QoS flow received by the base station includes a QoS parameter for the PDU set, the base station reports, to the core network, whether the base station supports PDU set processing.

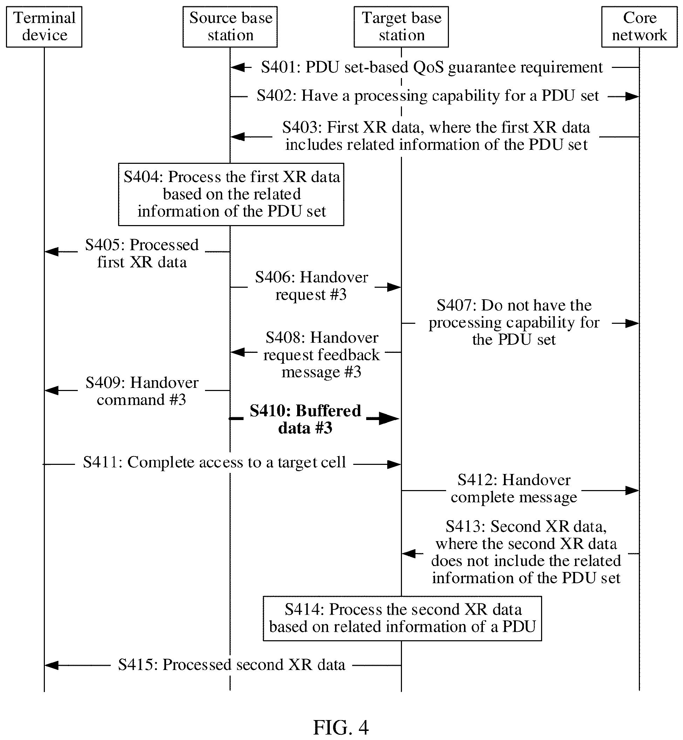

FIG. 4 is a schematic flowchart of inter-base-station handover in an XR service according to an embodiment of this application. It is assumed that in FIG. 4, a source base station supports PDU set processing, a target base station does not support PDU set processing, and a terminal device runs an XR service (for example, receives an XR video from an XR server) and expects that data of the XR service can obtain a PDU set-based QoS guarantee. The source base station and the target base station shown in FIG. 4 may directly communicate with each other through an Xn interface.

S401: A core network sends a PDU set-based QoS guarantee requirement to the source base station.

The QoS guarantee requirement may include a QoS profile of a QoS parameter for the PDU set.

S402: The source base station sends capability indication information to the core network based on the QoS profile, where the capability indication information indicates that the source base station has a processing capability for the PDU set.

S403: The core network sends first XR data to the source base station, where the first XR data includes related information of the PDU set.

The related information of the PDU set may be carried in a packet header of a data packet in a QoS flow to which the first XR data belongs. The related information of the PDU set is, for example, a PDU set sequence number, a PDU sequence number within the PDU set, a PDU set end identifier, a data burst end identifier, a PDU set size, or PDU set importance.

S404: The source base station processes the first XR data based on the related information of the PDU set.

It should be understood that the source base station identifies the related information of the PDU set in the first XR data, to determine a specific PDU set corresponding to the first XR data, and provides PDU set-based scheduling processing for the first XR data, to guarantee a PDU set-based QoS requirement. The related information of the PDU set is described in detail above, and details are not described herein again.

S405: The source base station sends the processed first XR data to the terminal device.

The terminal device is currently in a source cell under the source base station. It is assumed that when a location of the terminal device changes, the terminal device expects to be handed over to a target cell under the target base station.

S406: The source base station sends a handover request #3 to the target base station, where the handover request #3 includes the QoS profile of the QoS flow in which the first XR data is located, and the QoS profile includes the QoS parameter for the PDU set.

S407: When the target base station does not support PDU set processing, the target base station sends capability indication information to the core network, where the capability indication information indicates that the target base station does not support PDU set processing.

It should be understood that, learning of the capability indication information of the target base station by the core network device helps the core network send data to the target base station in a more targeted manner.

S408: The target base station performs admission control based on cell load, a capability, and the like, and determines a handover request feedback message #3.

A function of the handover request feedback message #3 is similar to that of the handover request feedback message #1. Details are not described herein again.

S409: The source base station sends a handover command #3 to the UE. The handover command #3 is used to instruct the UE to access the target cell.

S410: The source base station no longer performs data transmission with the UE, and sends buffered data #3 to the target base station.

The buffered data #3 is the first XR data that has been already buffered in the source base station. Therefore, a data packet header of the buffered data #3 carries the related information of the PDU set.

S411: The terminal device and the target base station complete access to the target cell.

S412: The target base station sends a handover complete message to the core network.

S413: The core network sends second XR data to the target base station, where the second XR data does not include the related information of the PDU set.

It should be understood that because the target base station does not support PDU set processing, data transmission between the core network and the target base station falls back to conventional PDU-based transmission. In other words, the second XR data includes related information of a PDU instead of the related information of the PDU set.

S414: The target base station processes the second XR data based on the related information of the PDU.

S415: The target base station sends the processed second XR data to the terminal device.

A difference between base stations in terms of whether the base stations support PDU set processing is mainly due to a difference in capabilities and upgrade statuses of the base stations in an actual network. The foregoing solution has considered that different base stations may have different capabilities for whether the base stations support PDU set processing, and designed a corresponding solution to cause the base station to notify the core network of the capability, so that the core network can properly determine whether to provide a PDU set-based QoS guarantee for a QoS flow and whether to add the related information of the PDU set to a data packet in the QoS flow. However, before data transmission between the target base station and the terminal device, because data that is originally buffered in the source base station further needs to be forwarded to the target base station, the buffered data may not match a capability of the target base station, as shown in FIG. 4. As a result, related information of a PDU set carried in a data packet header of the buffered data may be useless for the target base station, but the related information of the PDU set occupies a resource of a forwarding link (for example, an Xn link or an NG link), causing a waste of resources. Moreover, because the target base station does not understand the meaning of the information, confusion or misunderstanding may occur, causing some unknown errors.

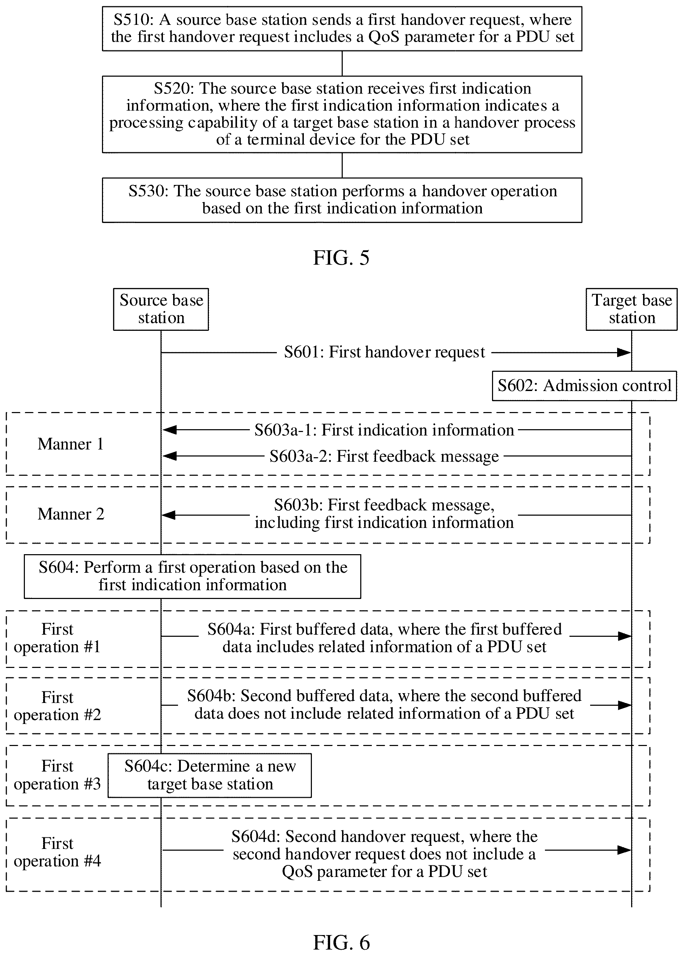

In view of the foregoing problems, embodiments of this application provide a data transmission method and apparatus. Detailed descriptions are provided below with reference to FIG. 5 to FIG. 15.

FIG. 5 is a schematic flowchart of a data transmission method according to an embodiment of this application. The method is applied to a source base station in a handover process of a terminal device.

S510: The source base station sends a first handover request, where the first handover request includes a QoS parameter for a PDU set.

The QoS parameter includes one or more of a protocol data unit set delay budget PSDB, a protocol data unit set error rate PSER, and protocol data unit set integrated information PSIHI. It should be understood that specific meanings of these parameters are described above, and details are not described herein again.

In a possible implementation, the source base station directly sends the first handover request to a target base station in the handover process of the terminal device through an Xn interface.

In a possible implementation, the source base station sends the first handover request to a core network through an NG interface, and the core network may send the first handover request to a target base station through an NG interface, or the core network may send the processed first handover request to a target base station through an NG interface.

S520: The source base station receives first indication information, where the first indication information indicates a processing capability of the target base station in the handover process of the terminal device for the PDU set.

In a possible implementation, the source base station may directly receive the first indication information from the target base station through the Xn interface.

In a possible implementation, the target base station may send the first indication information to the core network through the NG interface, and the core network sends the first indication information to the source base station through the NG interface.

It should be understood that the first indication information may be in an independent message, or may be carried in a first feedback message in response to the first handover request. This is not limited in this embodiment of this application. Details are described in FIG. 6.

S530: The source base station performs a handover operation based on the first indication information.

In a possible implementation, when the first indication information indicates that the target base station has the processing capability for the PDU set, the source base station sends a first buffered data packet, where the first buffered data packet includes related information of the PDU set.

It should be understood that the related information of the PDU set is described in detail above, and details are not described herein again.

In a possible implementation, when the first indication information indicates that the target base station does not have the processing capability for the PDU set, a second buffered data packet is sent, where the second buffered data packet does not include related information of the PDU set; or a new target base station is determined; or a second handover request is sent to the target base station, where the second handover request does not include the QoS parameter for the PDU set.

In the foregoing technical solution, the source base station fully considers the processing capability of the target base station for the PDU set, and makes a proper handover decision, to avoid a waste of link resources and even a data decoding error caused by a mismatch between processing capabilities of the two base stations for the PDU set. For example, if the target base station does not support PDU set processing, and there is another nearby base station available for handover, the source base station may attempt to hand over the terminal device to another base station, so that the terminal device can continue to enjoy a PDU set-based QoS guarantee. Even if the terminal device has no other choice but can only be handed over to the current target base station, the source base station may optimize a forwarded data packet during subsequent buffered data forwarding, and remove the information about the PDU set carried in a packet header of the forwarded data packet, to reduce resource consumption of a forwarding link and improve forwarding efficiency.

A more specific implementation in which the source base station learns whether another base station has the processing capability for the PDU set is described in detain below with reference to FIG. 6 to FIG. 11.

FIG. 6 is a schematic flowchart of another data transmission method according to an embodiment of this application. In the diagram of interaction shown in FIG. 6, the corresponding method is illustrated by using an example in which a source base station and a target base station in a handover process of a terminal device are used as execution entities of the interaction. However, an execution entity of the interaction is not limited in this application. For example, the source base station in FIG. 6 may alternatively be a chip, a chip system, or a processor that supports the source base station in implementing the corresponding method, or may be a logical module or software that can implement all or some functions of the source base station. The target base station in FIG. 6 may alternatively be a chip, a chip system, or a processor that supports the target base station in implementing the corresponding method, or may be a logical module or software that can implement all or some functions of the target base station.

S601: The source base station sends a first handover request to the target base station, where the first handover request includes a QoS parameter for a PDU set.

The first handover request is used to request the terminal device to be handed over from the source base station to the target base station. It should be understood that the terminal device needs a PDU set-based QoS guarantee.

It should be understood that specific content of the QoS parameter for the PDU set is described in detail above. The QoS parameter for the PDU set may include one or more of a PDU set delay budget PSDB, a PDU set error rate PSER, and PDU set integrated information PSIHI.

S602: The target base station performs admission control in response to the first handover request.

It should be understood that, after admission control is performed, the target base station has confirmed information related to the first handover request.

The information related to the first handover request may include at least one of the following information: whether the first handover request is agreed to, whether a QoS flow is admitted, and whether a processing capability for the PDU set is available.

The QoS flow is a QoS flow that has a PDU set-based QoS requirement.

It should be understood that when determining whether to agree to the first handover request and/or whether to admit the QoS flow, the target base station may not consider a processing capability of the target base station for the PDU set, for example, consider only a current load status and/or current resource usage of the target base station. Alternatively, the target base station may consider a processing capability of the target base station for the PDU set, to determine whether to agree to the first handover request and/or whether to admit the QoS flow.

Manner 1: The target base station sends, in a separate message, indication information indicating whether the target base station has the processing capability for the PDU set.

S603a-1: The target base station sends first indication information to the source base station, where the first indication information indicates the processing capability of the target base station for the PDU set.

In other words, the first indication information indicates whether the target base station has the processing capability for the PDU set.

S603a-2: The target base station sends a first feedback message to the source base station, where the first feedback message indicates whether the first handover request is agreed to. Optionally, the first feedback message may further indicate whether the QoS flow is admitted.

The QoS flow is a QoS flow that has a QoS requirement of the PDU set.

In a possible implementation, when a message type of the first feedback message is a handover request acknowledge message, the first feedback message indicates that the first handover request is agreed to. When a message type of the first feedback message is a handover preparation failure message, the first feedback message indicates that the first handover request is not agreed to.

It should be understood that an execution sequence of S603a-1 and S603a-2 is not limited in this embodiment of this application. For example, S603a-1 may be performed before S603a-2. For another example, S603a-2 may be performed before S603a-1. In this example, the target base station may first perform S603a-2 based on a factor other than the processing capability for the PDU set. For example, based on current load or a current available resource, the target base station determines indication information of the first feedback message, for example, determines that the first feedback message indicates whether the first handover request is agreed to. Then, S603a-1 is performed when the first feedback message indicates that the first handover request is agreed to or the first handover request is not agreed to.

Manner 2: The target base station includes, in a first feedback message, indication information indicating whether the target base station has the processing capability for the PDU set.

S603b: The target base station sends the first feedback message to the source base station, where the first feedback message includes first indication information, and the first indication information indicates whether the target base station has the processing capability for the PDU set.

Optionally, for other specific indication information of the first feedback message, refer to S603a-2. Details are not described herein again.

In a possible implementation, the first indication information indicates that the target base station has the processing capability for the PDU set, that is, the target base station supports PDU set processing. The first feedback message indicates that the target base station agrees to the first handover request. Optionally, the first feedback message further indicates that the target base station admits the QoS flow.

For example, the first indication information may include an indication field. When the indication field is a first value, the first indication information indicates that the target base station has the processing capability for the PDU set. A specific value of the first value is not limited in this embodiment of this application, and the source base station and the target base station have a same meaning for the first value.

In a possible implementation, the first indication information indicates that the target base station does not have the processing capability for the PDU set, that is, the target base station does not support PDU set processing. The first feedback message indicates that the target base station agrees to the first handover request. Optionally, the first feedback message further indicates that the target base station admits the QoS flow.

In a possible implementation, the first indication information indicates that the target base station does not have the processing capability for the PDU set, that is, the target base station does not support PDU set processing. The first feedback message indicates that the target base station agrees to the first handover request. Optionally, the first feedback message further indicates that the target base station does not admit the QoS flow.

For example, the first indication information indicates that the target base station does not have the processing capability for the PDU set, that is, the target base station does not support PDU set processing. The first feedback message indicates that the target base station agrees to the first handover request. The first feedback message further indicates that the target base station does not admit the QoS flow.

A cause of non-admission of the QoS flow by the target base station is that the target base station does not support PDU set processing.

For example, the first indication information may include an indication field. When the indication field is a second value, the first indication information indicates that the target base station does not have the processing capability for the PDU set. A specific value of the second value is not limited in this embodiment of this application, and the source base station and the target base station have a same meaning for the second value.

For another example, the first feedback message may include a QoS flow not admitted list (QoS flow not admitted list), where the QoS flow not admitted list may include a quality of service flow identity (quality of service flow identity, QFI) corresponding to a QoS flow that is not admitted. The QoS flow not admitted list may further include a first cause (cause) field. The first cause field may be the first indication information. When the first cause field is a third value, the first cause field indicates that the target base station does not have the processing capability for the PDU set. In this case, the first indication information is carried in the first feedback message, and the cause field is a possible specific representation form of the first indication information. It should be further understood that a value of the third value is not limited in this embodiment of this application, and the source base station and the target base station have a same meaning for the third value.

When the target base station agrees to the first handover request, the first feedback message may also be referred to as a first handover request acknowledge message. In other words, the type of the first feedback message is a handover request acknowledge message.

In a possible implementation, the first indication information indicates that the target base station does not have the processing capability for the PDU set, that is, the target base station does not support PDU set processing. The first feedback message indicates that the target base station does not agree to the first handover request. Optionally, the first feedback message further indicates that the target base station does not admit the QoS flow.

When the target base station does not agree to the first handover request, the first feedback message may also be referred to as a first handover preparation failure message. In other words, the type of the first feedback message is a handover preparation failure message.

For example, the first handover preparation failure message includes a second cause field. The second cause field may be the first indication information. When the second cause field is a fourth value, the second cause field indicates that the target base station does not have the processing capability for the PDU set. In this case, the first indication information is carried in the first feedback message, and the cause field is a possible specific representation form of the first indication information. It should be further understood that a value of the fourth value is not limited in this embodiment of this application, and the source base station and the target base station have a same meaning for the fourth value.

For another example, the first indication information may include an indication field. When the indication field is a second value, the first indication information indicates that the target base station does not have the processing capability for the PDU set.

It should be understood that, in S603a-1, S603a-2, or S603b, the source base station learns of a part or all of the information related to the first handover request.

It should be further understood that in S603a-1, S603a-2, or S603b, for example, the source base station and a target communicate with each other through an Xn interface. The target base station may further cause the source base station to learn of, via a core network, the information in S603a-1, S603a-2, or S603b through NG interfaces. This implementation is not shown in the accompanying drawings. For specific interaction, refer to (b) in FIG. 3.

S604: The source base station performs a first operation based on the first indication information.

The first operation may be understood as a handover operation related to inter-base-station handover. S604a to S604d are four possible first operations.

In a possible implementation, S604a may be performed when the first indication information indicates that the target base station has the processing capability for the PDU set.

In a possible implementation, S604b, S604c, or S604d may be performed when the first indication information indicates that the target base station does not have the processing capability for the PDU set.

In the foregoing technical solution, the source base station fully considers the processing capability of the target base station for the PDU set, to avoid a waste of link resources and even a data decoding error caused by a mismatch between processing capabilities of the two base stations for the PDU set.

First operation #1: S604a: The source base station sends first buffered data to the target base station, where the first buffered data includes related information of the PDU set.

For example, an execution condition of the first operation #1 may be that the first indication information indicates that the target base station has the processing capability for the PDU set. Alternatively, an execution condition may be that the first indication information indicates that the target base station has the processing capability for the PDU set, the first feedback message indicates that the target base station agrees to the first handover request, and the first feedback message further indicates that the QoS flow is admitted.

In this way, when the first indication information indicates that the target base station has the processing capability for the PDU set, the source base station directly forwards the to-be-forwarded buffered data to the target base station. Compared with a case in which the source base station directly forwards the buffered data to the target base station when the capability of the target base station is unknown, in the solution of this application, it can be ensured that no link resource is wasted during buffered data forwarding.

First operation #2: S604b: The source base station sends second buffered data to the target base station, where the second buffered data does not include related information of the PDU set.

Before sending the second buffered data, the source base station removes the related information of the PDU set from a data packet header of the to-be-forwarded buffered data. The related information of the PDU set is described in detail above, and details are not described herein again.

For example, an execution condition of the first operation #2 may be that the first indication information indicates that the target base station does not have the processing capability for the PDU set. Alternatively, an execution condition may be that the first indication information indicates that the target base station does not have the processing capability for the PDU set, and the first feedback message indicates that the first handover request is agreed to.

In this way, when the first indication information indicates that the target base station does not have the processing capability for the PDU set, the source base station removes the related information of the PDU set from the data packet of the to-be-forwarded buffered data, so that a size of the packet header of the to-be-forwarded data is reduced while an inter-base-station handover process between the source base station and the target base station remains unchanged, thereby reducing consumption of forwarding link resources.

First operation #3: S604c: The source base station determines a new target base station.

In other words, the source base station may abandon a subsequent handover step, and attempt to search for another base station that supports PDU set processing to re-initiate handover.

For example, an execution condition of the first operation #3 may be Case 1: The first indication information indicates that the target base station does not have the processing capability for the PDU set. Alternatively, an execution condition may be Case 2: The first indication information indicates that the target base station does not have the processing capability for the PDU set, the first feedback message indicates that the first handover request is agreed to, and the first feedback message further indicates that the QoS flow is admitted. Alternatively, an execution condition may be Case 3: The first indication information indicates that the target base station does not have the processing capability for the PDU set, the first feedback message indicates that the first handover request is agreed to, and the first feedback message further indicates that the QoS flow is not admitted. Alternatively, an execution condition may be Case 4: The first indication information indicates that the target base station does not have the processing capability for the PDU set, and the first feedback message indicates that the first handover request is not agreed to.

In this way, when the first indication information indicates that the target base station does not have the processing capability for the PDU set, a more appropriate new target base station is found, so that capabilities of two base stations that perform inter-base-station handover can match, to ensure that a PDU set-based QoS guarantee is needed, and is more suitable for a PDU set-based data transmission process.

First operation #4: S604d: The source base station sends a second handover request to the target base station, where the second handover request does not include the QoS parameter for the PDU set.

In other words, the source base station further sends the second handover request to the target base station. A difference between the second handover request and the first handover request lies in that the second handover request does not include the QoS parameter for the PDU set. To be specific, the source base station removes the QoS parameter for the PDU set from a QoS profile of a QoS flow that requires the PDU set, falls back the QoS flow to a common QoS flow that has a QoS requirement at granularity of a PDU, and then sends the handover request to the target base station.

Optionally, when the target base station indicates, to the source base station, that the second handover request is agreed to, to-be-forwarded buffered data is forwarded after the related information of the PDU set is removed from the data.

For example, an execution condition of the first operation #4 may be that the first indication information indicates that the target base station does not have the processing capability for the PDU set. Alternatively, an execution condition may be that the first indication information indicates that the target base station does not have the processing capability for the PDU set, the first feedback message indicates that the first handover request is agreed to, and the first feedback message further indicates that the QoS flow is not admitted. Alternatively, an execution condition may be that the first indication information indicates that the target base station does not have the processing capability for the PDU set, and the first feedback message indicates that the first handover request is not agreed to.

In this way, when the first indication information indicates that the target base station does not have the processing capability for the PDU set, inter-base-station handover between the source base station and the target base station may continue to be implemented, thereby avoiding a problem that a service is interrupted because the terminal cannot be handed over in a timely manner. In addition, a size of a packet header of the to-be-forwarded data is reduced, thereby reducing consumption of forwarding link resources.

It should be understood that in S604a, S604b, or S604d, for example, the source base station and a target communicate with each other through an Xn interface. The source base station may further perform, via a core network, the steps in S604a, S604b, or S604d with the target base station through NG interfaces. This implementation is not shown in the accompanying drawings. For specific interaction, refer to (b) in FIG. 3.

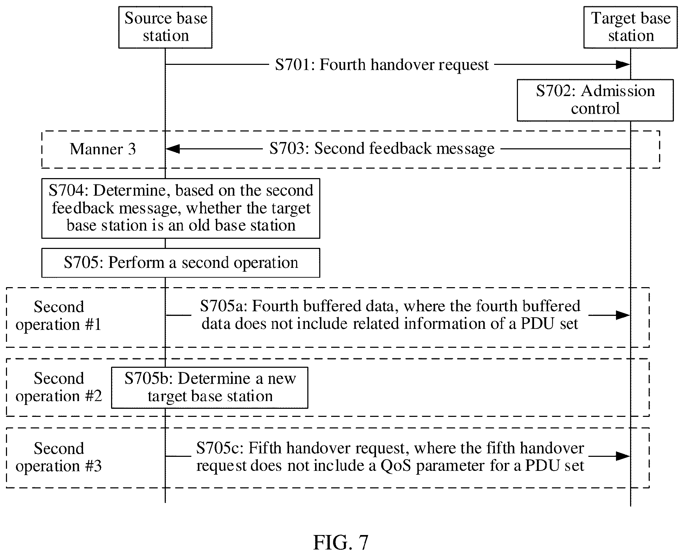

FIG. 7 is a schematic flowchart of still another data transmission method according to an embodiment of this application. Similarly, in the diagram of interaction shown in FIG. 7, the corresponding method is illustrated by using an example in which a source base station and a target base station in a handover process of a terminal device are used as execution entities of the interaction. However, an execution entity of the interaction is not limited in this application. For example, the source base station in FIG. 7 may alternatively be a chip, a chip system, or a processor that supports the source base station in implementing the corresponding method, or may be a logical module or software that can implement all or some functions of the source base station. The target base station in FIG. 7 may alternatively be a chip, a chip system, or a processor that supports the target base station in implementing the corresponding method, or may be a logical module or software that can implement all or some functions of the target base station.

It should be understood that, because a PDU set-related technology is introduced in 3GPP R18, some base stations in an actual network may not be upgraded to R18. The target base station in FIG. 7 is a base station that is not upgraded, and may also be referred to as an old base station. The source base station in FIG. 7 is a base station that is upgraded, and may also be referred to as a new base station.

S701: The source base station sends a fourth handover request to the target base station, where the fourth handover request includes a QoS parameter for a PDU set.

It should be understood that a function of the fourth handover request and the included QoS parameter for the PDU set are similar to those of the first handover request. Details are not described herein again. For the details, refer to FIG. 6.

S702: The target base station performs admission control in response to the fourth handover request.

It should be understood that, because the target base station is an old base station that is not upgraded, the target base station cannot identify a meaning of the parameter for the PDU set in the fourth handover request.

After admission control is performed, the target base station determines a second feedback message.

It should be understood that, because the target base station is an old base station, when determining the second feedback message, the target base station considers a factor related to a capability of the target base station, for example, a current load status and a current available resource status of the target base station.

A type of the second feedback message may be a handover request acknowledge message or a handover preparation failure message.

S703: The target base station sends the second feedback message to the source base station, where the second feedback message indicates whether the target base station agrees to the fourth handover request. Optionally, the second feedback message further indicates whether a QoS flow is admitted, where the QoS flow is a QoS flow that has a QoS requirement of the PDU set.

It should be understood that content included in the second feedback message in FIG. 7 may be similar to that included in S603a-2 in FIG. 6. For details, refer to S603a-2. The details are not described herein again.

In other words, if the target base station is an old base station, the second feedback message does not include indication information indicating whether the target base station has a processing capability for the PDU set.

In a possible implementation, the second feedback message indicates that the target base station agrees to the fourth handover request. Optionally, the second feedback message further indicates that the QoS flow is admitted.

In a possible implementation, the second feedback message indicates that the target base station agrees to the fourth handover request. Optionally, the second feedback message further indicates that the target base station does not admit the QoS flow.

For example, the second feedback message may include a QoS flow not admitted list, where the QoS flow not admitted list may include a QFI corresponding to a QoS flow that is not admitted. The QoS flow not admitted list may further include a third cause field, and the third cause field may be a specific cause or the like. A specific cause corresponding to the third cause field may be a capability corresponding to the target base station, for example, the target base station is currently overloaded, or the target base station has no available resource.

In a possible implementation, the second feedback message indicates that the target base station does not agree to the fourth handover request. The second feedback message may further include a fourth cause field, and the fourth cause field may be a specific cause or the like. A specific cause corresponding to the fourth cause field may be a capability corresponding to the target base station, for example, the target base station is currently overloaded, or the target base station has no available resource.

S704: The source base station determines, based on the second feedback message, whether the target base station is an old base station.

It should be understood that the source base station does not know whether the target base station is upgraded, and the source base station may determine, based on the second feedback message not including the indication information for feeding back the processing capability for the PDU set, that the target base station is an old base station, that is, determine that the old base station does not have the processing capability for the PDU set.

S705: Perform a second operation.

The second operation may be understood as a handover operation related to inter-base-station handover. S705a to S705c are three possible second operations.

Second operation #1: S705a: The source base station sends fourth buffered data to the target base station, where the fourth buffered data does not include related information of the PDU set.

For example, an execution condition of the second operation #1 may be that the second feedback message indicates that the fourth handover request is agreed to, or the second feedback message may indicate that the fourth handover request is agreed to and the QoS flow is admitted.

In this way, when the target base station is an old base station, the source base station removes the related information of the PDU set from a data packet of the to-be-forwarded buffered data, so that a size of a packet header of the to-be-forwarded data is reduced while an inter-base-station handover process between the source base station and the old base station that is not upgraded remains unchanged, thereby reducing consumption of forwarding link resources.

Second operation #2: S705b: The source base station determines a new target base station.

It should be understood that, if the target base station is determined as an old base station in S704, and the old base station does not have the processing capability for the PDU set, the source base station may determine a new target base station.

In a possible implementation, the source base station may abandon a subsequent handover step, and attempt to search for another base station that supports PDU set processing to re-initiate handover.

For example, in this implementation, an execution condition of the second operation #2 may be as follows: Case 1: The second feedback message may indicate that the fourth handover request is agreed to and the QoS flow is admitted. Case 2: The second feedback message may indicate that the fourth handover request is agreed to, and the second feedback message further indicates that the QoS flow is not admitted, where the QoS flow not admitted list included in the second feedback message may further include the third cause field, and the third cause field indicates another cause. In other words, the second feedback message indicates that the target base station does not admit the QoS flow, but does not feed back a specific cause of non-admission of the QoS flow by the target base station. Case 3: The second feedback message may indicate that the fourth handover request is not agreed to, where the second feedback message may further include the fourth cause field, and the fourth cause field indicates another cause. In other words, the second feedback message indicates that the target base station does not agree to the handover request, but does not feed back a specific cause of not agreeing to the handover request by the target base station.

In a possible implementation, the source base station may abandon a subsequent handover step, and determine a new target base station based on the cause of not agreeing to the fourth handover request or the cause of non-admission of the QoS flow.

For example, in this implementation, an execution condition of the second operation #2 may be that the second feedback message indicates that the fourth handover request is not agreed to and/or the QoS flow is not admitted, where the second feedback message may further include the third cause field or the fourth cause field, and the third cause field or the fourth cause field indicates a cause related to the capability of the target base station, for example, the target base station is currently overloaded or has no available resource.

In this implementation, a determined new target base station may be a new target base station with light load, or may be a new target base station with sufficient available resources.

Second operation #3: S705c: The source base station sends a fifth handover request to the target base station, where the fifth handover request does not include the QoS parameter for the PDU set.

It should be understood that the fifth handover request in S705c is similar to the second handover request in FIG. 6. Details are not described herein again.

For example, an execution condition of the second operation #3 may be that the second feedback message indicates that the fourth handover request is not agreed to and/or the QoS flow is not admitted.

In this way, when the target base station is an old base station that is not upgraded, inter-base-station handover between the source base station and the old base station may continue to be implemented, thereby avoiding a problem that a service is interrupted because the terminal cannot be handed over in a timely manner. In addition, a size of a packet header of the to-be-forwarded data is reduced, thereby reducing consumption of forwarding link resources.

It should be understood that in S701, S703, S705a, S705b, and S705c, for example, the source base station and a target communicate with each other through an Xn interface. The source base station may further perform, via a core network, the steps in S701, S703, S705a, S705b, and S705c with the target base station through NG interfaces. This implementation is not shown in the accompanying drawings. For specific interaction, refer to (b) in FIG. 3.

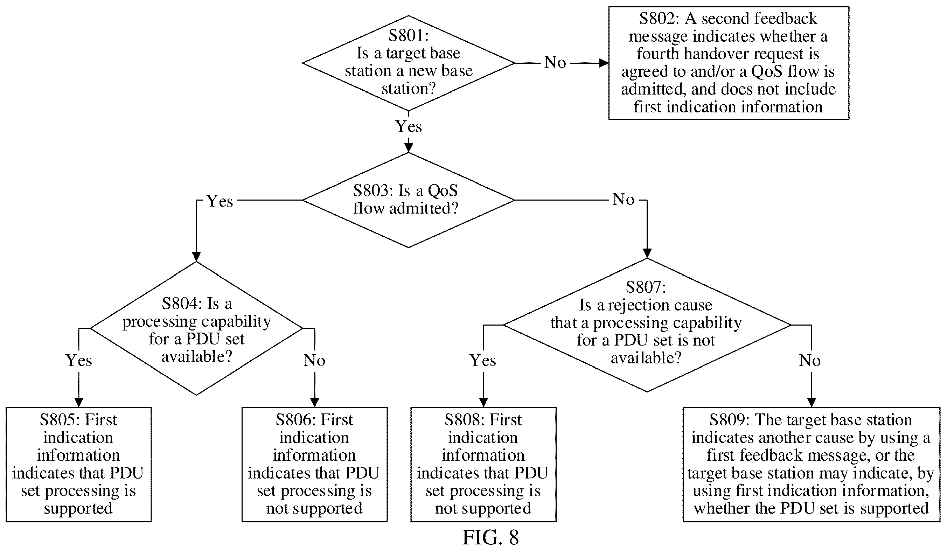

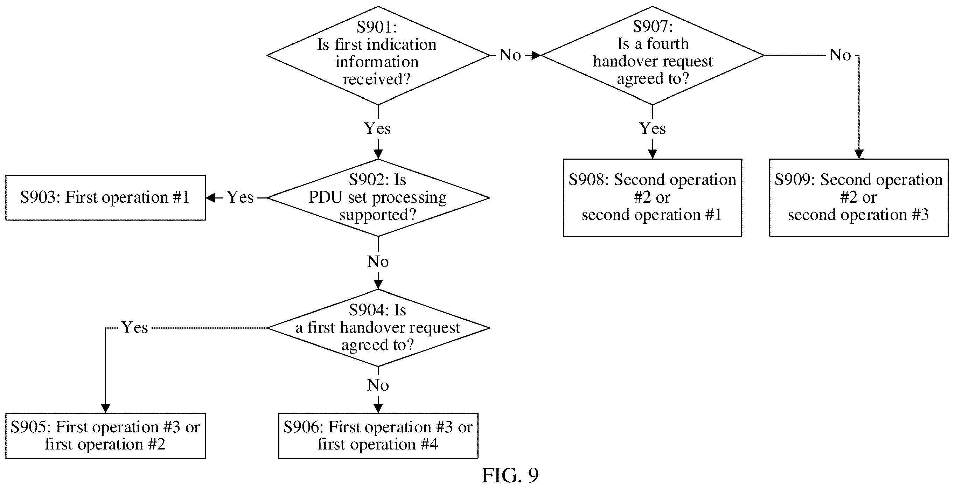

With reference to FIG. 8 and FIG. 9, a possible process of determining a feedback message in response to a handover request during admission control is described below from the perspective of a target base station, and a possible process of determining a handover operation is described below from the perspective of a source base station.

FIG. 8 is a schematic flowchart of behaviors of a target base station according to an embodiment of this application. It should be understood that FIG. 8 is a comprehensive description of whether the target base station is a new base station or an old base station.

S801: Determine whether the target base station is a new base station.

If the target base station is an old base station, in S802, the target base station determines that a second feedback message indicates whether a fourth handover request is agreed to and/or whether a QoS flow is admitted.

The second feedback message does not include first indication information, that is, does not include feedback information indicating whether the old base station has a processing capability for a PDU set. It should be understood that, for a specific case, refer to FIG. 7.

If the target base station is a new base station, in S803, whether the target base station admits a QoS flow is determined.

If the target base station admits the QoS flow, in S804, whether the target base station has a processing capability for a PDU set is determined.

If the target base station has the processing capability for the PDU set, in S805, the target base station determines first indication information to indicate that PDU set processing is supported.

If the target base station does not have the processing capability for the PDU set, in S806, the target base station determines first indication information to indicate that PDU set processing is not supported.

In this case, a first feedback message may indicate that a first handover request is agreed to and a QoS flow is admitted.

It should be understood that a sequence of determining in S803 and S804 is not limited, and FIG. 8 is merely an example for description.

If the target base station does not admit the QoS flow, in S807, it is determined whether a rejection cause of rejecting admission of the QoS flow by the target base station is that the target base station does not have the processing capability for the PDU set.

Optionally, the target base station may further determine whether to agree to the first handover request. A factor for considering the first handover request may be the processing capability of the target base station for the PDU set, or may be another capability of the target base station, for example, a load status of the target base station or an available resource of the target base station.

If the rejection cause of rejecting admission of the QoS flow by the target base station is that the target base station does not have the processing capability for the PDU set, in S808, first indication information determined by the target base station indicates that PDU set processing is not supported.

In this case, a first feedback message may indicate that a first handover request is agreed to and a QoS flow is not admitted. Alternatively, a first feedback message may indicate that a first handover request is not agreed to.

If the rejection cause of rejecting admission of the QoS flow by the target base station is not that the target base station does not have the processing capability for the PDU set, in S809, first feedback message determined by the target base station indicates another cause. Alternatively, in addition to determining a first feedback message, the target base station may further determine first indication information to indicate whether PDU set processing is not supported.

In this case, the first feedback message may further indicate that the target base station agrees to a first handover request and does not admit a QoS flow. Alternatively, the first feedback message may indicate that the target base station does not agree to a first handover request.

The first feedback message determined by the target base station in S803 to S809 may include the first indication information, or may not include the first indication information. It should be understood that, for a specific case, refer to FIG. 6.

FIG. 9 is a schematic flowchart of behaviors of a source base station according to an embodiment of this application. It should be understood that FIG. 9 is a comprehensive description of a handover operation performed after the source base station receives different feedback messages.

S901: The source base station determines whether first indication information is received.

The first indication information indicates whether a target base station has a processing capability for a PDU set.

If the source base station determines that the first indication information is received, in S902, whether the target base station supports PDU set processing is determined based on the first indication information.

If the first indication information indicates that the target base station supports PDU set processing, in S903, a first operation #1 is performed.

If the first indication information indicates that the target base station does not support PDU set processing, in S904, whether the target base station agrees to a first handover request is determined based on a first feedback message.

If the first feedback message indicates that the first handover request is agreed to, in S905, a first operation #3 or a first operation #2 is performed.

If the first feedback message indicates that the first handover request is not agreed to, in S906, a first operation #3 or a first operation #4 is performed.

It should be understood that, for the first operation #1, the first operation #2, the first operation #3, and the first operation #4, refer to FIG. 6. Details are not described herein again. In addition, for details about execution conditions for triggering these operations, refer to the descriptions in FIG. 6. In addition, a sequence of determining in S902, S903, and S904 is not limited, and FIG. 9 is merely an example for description.

If the source base station determines that the first indication information is not received, and the source base station determines that the target base station is an old base station, in S902, whether the target base station agrees to a fourth handover request is determined based on a second feedback message.

If the second feedback message indicates that the fourth handover request is agreed to, in S908, a second operation #1 or a second operation #2 is performed.

If the second feedback message indicates that the fourth handover request is not agreed to, in S909, a second operation #3 or a second operation #2 is performed.

It should be understood that, for the second operation #1, the second operation #2, and the second operation #3, refer to FIG. 7. Details are not described herein again. In addition, for details about execution conditions for triggering these operations, refer to the descriptions in FIG. 7.

If the first operation #4 or the second operation #3 in the handover operation in FIG. 6, FIG. 7, or FIG. 9 is performed, the QoS parameter for the PDU set has been removed from a handover request sent by the source base station to the target base station, and the target base station does not know that service data of a terminal device needs a PDU set-based QoS guarantee. Therefore, a QoS profile stored by the current target base station does not include the QoS parameter for the PDU set. When the terminal device needs to be handed over from the current target base station to a next target base station in a handover process, a handover request in this case does not include the QoS parameter for the PDU set. If the next target base station has a processing capability for the PDU set, the next target base station does not feed back, to a core network, that the next target base station has the processing capability for the PDU set. Consequently, the core network does not add related information of the PDU set to a data packet, and the terminal device cannot return to a PDU set-based QoS guarantee.

In view of this, embodiments of this application provide a further improvement solution for the foregoing problem.

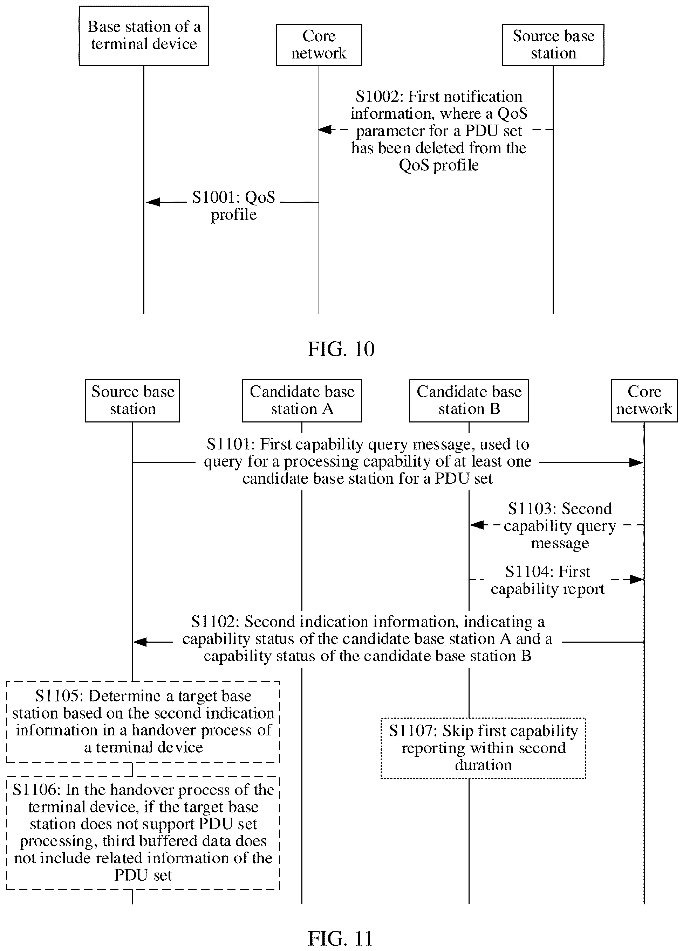

FIG. 10 is a schematic flowchart of yet another data transmission method according to an embodiment of this application.

S1001: A core network sends a QoS profile to a base station of a terminal device, where the QoS profile includes a QoS parameter for a PDU set.

In a possible implementation, the core network periodically sends a QoS profile to the base station of the terminal device, until a new base station receives the new QoS profile.

It should be understood that, alternatively, the base station of the terminal device may resend the QoS profile to a target base station each time the terminal device is handed over to the target base station.

In this way, because the core network side always stores the complete QoS profile, including the QoS parameter for the PDU set, in this update manner, even if the QoS parameter for the PDU set in the QoS profile on the base station side is lost, the QoS parameter for the PDU set may be obtained from the core network again, so that related processing for the PDU set is reenabled.

Optionally, before S 1001, in S 1002, after a handover process of the terminal device, a source base station sends first notification information to the core network, where the first notification information indicates that the QoS parameter for the PDU set has been deleted from the QoS profile of the source base station.

An execution condition of S 1002 may be that the source base station performs a first operation #4 or a second operation #3.

In this way, it can be ensured that a PDU set-based QoS guarantee for service data in the terminal device is not degraded to a PDU-based QoS guarantee due to cell handover, and signaling exchange between the core network and the base station can be reduced.

According to the foregoing method, when performing inter-base-station handover, the source base station can learn of a processing capability of the target base station in the handover process of the terminal device for the PDU set. Before inter-base-station handover, the source base station may also learn of a processing capability of a neighboring base station for the PDU set.

FIG. 11 is a schematic flowchart of yet another data transmission method according to an embodiment of this application. In the diagram of interaction shown in FIG. 11, the corresponding method is illustrated by using an example in which a source base station, a candidate base station B, and a core network are used as execution entities of the interaction. However, an execution entity of the interaction is not limited in this application. For example, the source base station in FIG. 11 may alternatively be a chip, a chip system, or a processor that supports the source base station in implementing the corresponding method, or may be a logical module or software that can implement all or some functions of the source base station. The candidate base station B in FIG. 11 may alternatively be a chip, a chip system, or a processor that supports the candidate base station B in implementing the corresponding method, or may be a logical module or software that can implement all or some functions of the candidate base station B. The core network in FIG. 11 may be a chip, a chip system, or a processor that supports the core network in implementing the corresponding method, or may be a logical module or software that can implement all or some functions of the core network.

S1101: The source base station sends a first capability query message to the core network, where the first capability query message is used to query for a processing capability of at least one candidate base station for a PDU set.

For example, the at least one candidate base station may include a candidate base station A and the candidate base station B shown in FIG. 11.

Specifically, the first capability query message includes an identifier list of the at least one candidate base station.

S1102: The core network sends second indication information to the source base station, where the second indication information indicates the processing capability of the at least one candidate base station for the PDU set.

Optionally, the core network determines the second indication information.

It should be understood that, there is a high probability that the core network has learned of a processing capability of each base station for the PDU set. This is because as long as any terminal device needs to perform a service (for example, an XR service) with a PDU set-based QoS guarantee, when establishing a PDU session or a QoS flow for the service, the core network requires a base station of the terminal device to feed back whether the base station has a processing capability for the PDU set. Because a processing capability is capability information of a base station, once the base station feeds back the processing capability to the core network once, the core network knows a status of the base station.

In a possible implementation, if the core network has learned of the processing capability of the at least one candidate base station for the PDU set, the second indication information indicates whether the at least one candidate base station supports PDU set processing.

In a possible implementation, if the core network has not obtained a processing capability of a base station in the at least one candidate base station for the PDU set, the second indication information indicates that the processing capability of the base station for the PDU set is unknown or unavailable, and indicates whether another base station in the at least one candidate base station supports PDU set processing.

If the core network has not obtained a processing capability of a base station in the at least one candidate base station for the PDU set, for example, the core network does not know a processing capability of the candidate base station B for the PDU set.

Optionally, in S1103, the core network sends a second capability query message to the candidate base station B, where the second capability query message is used to query for the processing capability of the candidate base station B for the PDU set.

Optionally, in S1104, the candidate base station B sends a first capability report to the core network, where the first capability report indicates whether the candidate base station B supports PDU set processing.

It should be understood that the first capability query message sent by the source base station to the core network may also be further forwarded in the core network. For example, the source base station sends the message to an AMF, and then the AMF forwards the message to an SMF. Similarly, the first capability report of the candidate base station B may also undergo the foregoing forwarding process. Correspondingly, the second capability query message sent by the core network may alternatively be sent by the SMF to the AMF, and then forwarded by the AMF to the candidate base station B.

Optionally, in S1107, the candidate base station B no longer performs first capability reporting within second duration.

Specifically, the second duration may be implemented by a first timer. For example, after S1104 is performed, the candidate base station B starts the first timer, and the candidate base station B no longer sends the first capability report to the core network within the second duration. The second duration may be predefined in a protocol, preconfigured by the core network for the candidate base station B, or determined by the candidate base station B.

The source base station may perform a third operation based on the second indication information.

Optionally, in S1105, a target base station is determined based on the second indication information in a handover process of the terminal device.

Specifically, the source base station determines, based on the processing capability of the at least one candidate base station for the PDU set indicated in the second indication information, a candidate base station that is in the at least one candidate base station and that has a processing capability for the PDU set as the target base station in the handover process of the terminal device.

For example, when the source base station selects the target base station for handover, obtained base station capability information may be included into a consideration indicator. When there are two candidate base stations, and reference signal quality of the terminal device in the two candidate base stations is equivalent (for example, an amplitude difference does not exceed 1 dB), the source base station preferentially selects a base station that supports PDU set processing as the target base station for inter-base-station handover.

In the foregoing technical solution, the processing capability of the at least one candidate base station for the PDU set is learned of, and during inter-base-station handover, a candidate base station having a processing capability for the PDU set is used as the target base station, so that a PDU set-based QoS requirement of the terminal device can be guaranteed.

Optionally, in S1106, in the handover process of the terminal device, one of the at least one candidate base station is used as the target base station, the target base station does not support PDU set processing, and a handover request sent to the target base station includes or does not include a QoS parameter for the PDU set. When the target base station agrees to the handover request, the source base station sends third buffered data to the target base station, where the third buffered data belongs to a QoS flow that has a QoS requirement of the PDU set, and the third buffered data does not include related information of the PDU set.

In the foregoing technical solution, even if there is no base station having a processing capability for the PDU set in candidate base stations around the source base station, an appropriate inter-base-station handover policy may be determined in advance, to improve data forwarding efficiency and avoid a waste of resources.

In the solution shown in FIG. 11, the source base station sends the first capability query message to the core network. Optionally, the source base station may further directly send a capability query message to a neighboring base station to query whether the neighboring base station has a processing capability for the PDU set. After receiving the capability query message, the neighboring base station feeds back a capability of the neighboring base station to the source base station. Alternatively, the source base station directly obtains, from a network administrator (for example, a network management system of an operator), a processing capability of a neighboring base station for the PDU set.

For the XR service, sometimes, a higher data sending rate is not necessarily better. The sending rate is a rate at which an application server sends data to a transmission network, that is, a rate at which the application server generates data, and is not an actual transmission rate of application data in the network.

For example, for a video, when a frame rate is fixed, a higher sending rate (or referred to as a bit rate) indicates a higher definition of each frame of video. However, because a bandwidth of the transmission network is limited, a higher sending rate does not indicate a higher transmission rate. When the sending rate exceeds an available network bandwidth, a packet loss and the like may occur, degrading user experience.

For example, it is assumed that for a video service, when a video definition is set to 1080p, a sending rate of the video service is 50 Mbps; and when the video definition is set to 4K, the sending rate of the video service is 200 Mbps, but the network bandwidth is only 100 Mbps. When the definition is set to 1080p, the available network bandwidth is greater than the video sending rate. Therefore, the network can support transmission of all video data, and users can watch videos properly. If the definition is adjusted to 4K, the available network bandwidth is less than the video sending rate. As a result, a part of the video data cannot be transmitted in a timely manner. In this case, video frames may fail to be decoded or fail to be decoded completely, causing black screen, black border, frame freezing, and the like during video playback, and significantly degrading user experience.

Therefore, the sending rate of the XR service needs to be adjusted based on a network status. For example, when the network is congested, the available bandwidth decreases. In this case, the application needs to decrease the sending rate of the XR service, to avoid frame freezing in the service that affects user experience.

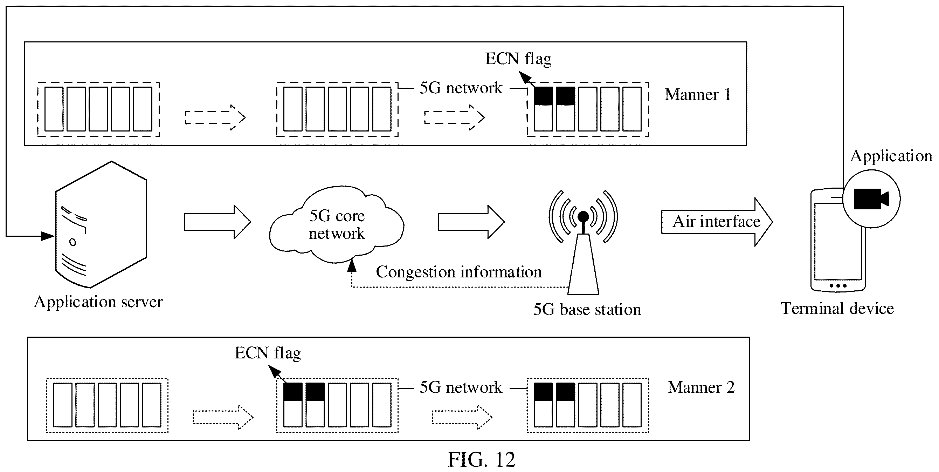

To achieve the foregoing objective in a 5G system, in 3GPP, a 5G low-latency, low-loss and scalable throughput (low-latency, low-loss and scalable throughput, L4S) mechanism is designed, so that an application can be aware of a status of a 5G transmission network. For the 5G network, a rate bottleneck actually lies in air interface transmission. Therefore, a congestion status of the 5G network may also be understood as a congestion status of an air interface. FIG. 12 is a diagram of an operating mode of an L4S mechanism according to an embodiment of this application.

As shown in FIG. 12, an operating mode of an L4S mechanism in the 5G system is as follows: Mode 1: The core network determines to add, through a 5G base station, an explicit congestion notification (explicit congestion notification, ECN) flag, or referred to as a network congestion experienced (Congestion Experienced, CE) flag, to an IP packet header included in a data packet. The 5G base station receives a data packet from the application server, and adds an ECN flag to a part of data packets based on a network congestion status. Mode 2: The core network determines to add an ECN flag to an IP packet header included in a data packet. In this case, the core network needs to obtain congestion information of the air interface from a 5G base station, and determines, based on the congestion information, a data packet to which an ECN flag is added. When the terminal device receives a data packet carrying an ECN flag, an application of the terminal device may determine a network congestion status based on a percentage of a data packet carrying an ECN flag in received data packets, and trigger the application server to adjust a sending rate of the data packet. FIG. 12 shows downlink data transmission. Uplink data transmission is similar and is not shown in the figure.

Currently, in 3GPP, a base station is only required to send, to the core network, whether the base station has a processing capability for the PDU set. Different base stations may also have different capabilities for the L4S mechanism. The core network cannot determine, based on the processing capability for the PDU set, whether the base station implements the L4S mechanism and a specific mode used to implement the L4S mechanism. Therefore, how to cause the core network to learn of an L4S mechanism of a base station so that the core network properly determines data transmission is an urgent problem to be resolved.

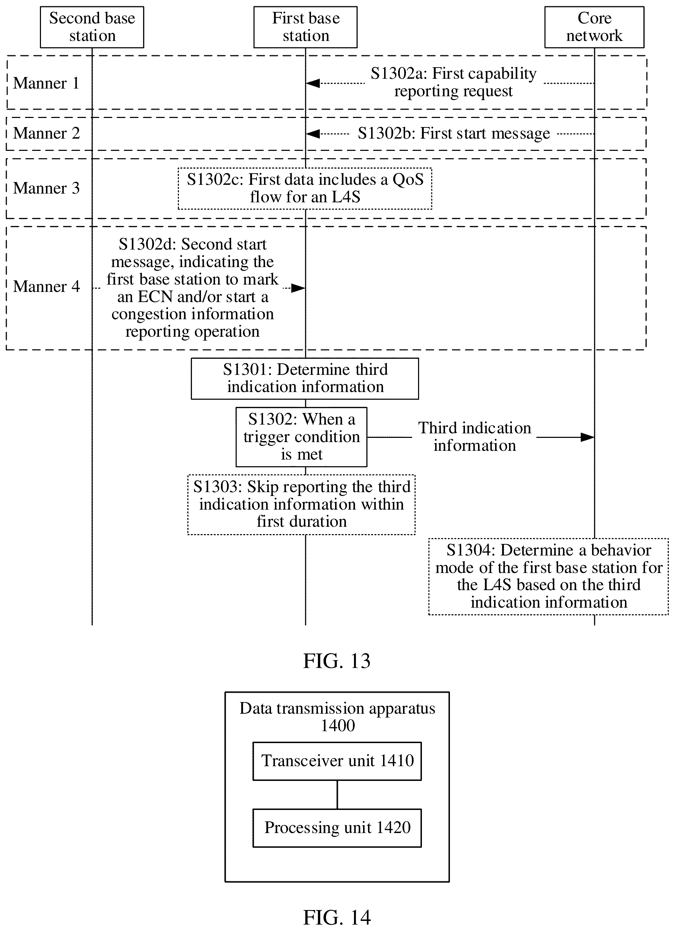

FIG. 13 is a schematic flowchart of yet another data transmission method according to an embodiment of this application. In the diagram of interaction shown in FIG. 13, the corresponding method is illustrated by using an example in which a first base station, a second base station, and a core network are used as execution entities of the interaction. However, an execution entity of the interaction is not limited in this application. For example, the first base station in FIG. 13 may alternatively be a chip, a chip system, or a processor that supports the first base station in implementing the corresponding method, or may be a logical module or software that can implement all or some functions of the first base station. The second base station in FIG. 13 may alternatively be a chip, a chip system, or a processor that supports the second base station in implementing the corresponding method, or may be a logical module or software that can implement all or some functions of the second base station. The core network in FIG. 13 may be a chip, a chip system, or a processor that supports the core network in implementing the corresponding method, or may be a logical module or software that can implement all or some functions of the core network.

S1301: The first base station determines third indication information, where the third indication information indicates capability information of the first base station for an L4S mechanism.

In a possible implementation, the third indication information indicates whether the first base station has both an ECN marking capability and a congestion information reporting capability.

When the third indication information indicates that the first base station has the capability information for the L4S mechanism, the first base station has the ECN marking capability and the congestion information reporting capability. When the third indication information indicates that the first base station does not have the capability information for the L4S mechanism, the first base station does not have the ECN marking capability and the congestion information reporting capability.

For example, one bit is used to represent the third indication information. When a value of the bit is a fifth value, for example, the value of the bit is "1", the third indication information indicates that the first base station has the ECN marking capability and the congestion information reporting capability. When a value of the bit is a sixth value, for example, the value of the bit is "0", the third indication information indicates that the first base station does not have the ECN marking capability and the congestion information reporting capability.

For another example, an enumerated type is used to represent the third indication information. When an enumerated value indicates support, the third indication information indicates that the first base station has the ECN marking capability and the congestion information reporting capability. When an enumerated value indicates no support, the third indication information indicates that the first base station does not have the ECN marking capability and the congestion information reporting capability.

In a possible implementation, the third indication information indicates whether the first base station has an ECN marking capability and/or whether the first base station has a congestion information reporting capability.

In other words, the ECN marking capability of the first base station and the congestion information reporting capability of the first base station may be separately indicated by using the third indication information.

For example, two bits are used to represent the third indication information. A 1^{st} bit indicates whether the first base station supports ECN marking. A value "1" may indicate that the first base station supports ECN marking, and a value "0" may indicate that the first base station does not support ECN marking. A 2^{nd} bit indicates whether the first base station supports congestion information reporting. A value "1" may indicate that the first base station supports congestion information reporting, and a value "0" may indicate that the first base station does not support congestion information reporting. It should be understood that a specific bit value corresponding to the third indication information is merely an example for description. This is not limited in this embodiment of this application.

It should be understood that, in this implementation, the third indication information may be in one message. For example, one message includes the 2-bit third indication information. Alternatively, the third indication information may be in two messages. For example, 2-bit information of the third indication information are respectively included in the two messages. In other words, one message includes one bit of the third indication information, and the other message includes the other bit of the third indication information.

In a possible implementation, the third indication information indicates whether the first base station has an ECN marking capability or a congestion information reporting capability.

For example, one bit is used to represent the third indication information. When a value of the bit is "1", the third indication information indicates that the first base station has the ECN marking capability. When a value of the bit is "0", the third indication information indicates that the first base station does not have the ECN marking capability. It should be understood that a specific bit value corresponding to the third indication information is merely an example for description. This is not limited in this embodiment of this application.

For another example, one bit is used to represent the third indication information. When a value of the bit is "1", the third indication information indicates that the first base station has the congestion information reporting capability. When a value of the bit is "0", the third indication information indicates that the first base station does not have the congestion information reporting capability. It should be understood that a specific bit value corresponding to the third indication information is merely an example for description. This is not limited in this embodiment of this application.

S1302: The first base station sends the third indication information to the core network when a trigger condition is met.

In a possible implementation, after the trigger condition is met, the first base station sends the third indication information to the core network when the first base station has both the ECN marking capability and the congestion information reporting capability for the L4S mechanism, or has the ECN marking capability, or has the congestion information reporting capability.

In this case, when the first base station does not send the third indication information to the core network, it indicates that the first base station has neither the ECN marking capability nor the congestion information reporting capability for the L4S mechanism, or does not have the ECN marking capability, or does not have the congestion information reporting capability.

In a possible implementation, after the trigger condition is met, the first base station sends the third indication information to the core network when the first base station has neither the ECN marking capability nor the congestion information reporting capability for the L4S mechanism, or does not have the ECN marking capability, or does not have the congestion information reporting capability.

In this case, when the first base station does not send the third indication information to the core network, it indicates that the first base station has both the ECN marking capability and the congestion information reporting capability for the L4S mechanism, or has the ECN marking capability, or has the congestion information reporting capability.

In the foregoing technical solution, the first base station may notify, in a timely manner, the core network of a status of supporting the L4S by the first base station, so that the core network learns of a capability of the first base station, and selects an appropriate manner when there is an L4S requirement. This helps adjust a sending rate of a service in a timely manner, and improve user experience. For example, if the first base station supports only ECN marking but does not support congestion reporting, the core network may indicate the first base station to perform ECN marking. However, if the first base station supports only congestion reporting but does not support ECN marking, the core network may indicate the first base station to perform congestion reporting, and the core network is responsible for ECN marking, so as to ensure proper functioning of the L4S.

It should be understood that before S1301, the trigger condition may be implemented in the following possible manners.

S1302a: The core network sends a first capability reporting request to the first base station, where the first capability reporting request is used to request the capability information of the first base station for the L4S mechanism.

In a possible implementation, the first capability reporting request is used to request the ECN marking capability and the congestion information reporting capability of the first base station for the L4S mechanism; or the first capability reporting request is used to request the ECN marking capability of the first base station, or the first capability reporting request is used to request the congestion information reporting capability.

In other words, the ECN marking capability and the congestion information reporting capability for the L4S mechanism may be in one capability reporting request, or may be in two capability reporting requests.

Specifically, that the trigger condition is met may be that the third indication information is sent in response to the first capability reporting request.

It should be understood that, in this embodiment of this application, after the trigger condition is met, whether the first base station sends the third indication information when the first base station has the capability information for the L4S mechanism or sends the third indication information when the first base station does not have the capability information for the L4S mechanism is not limited in this embodiment of this application.

S1302b: The core network sends a first start message to the first base station, where the first start message indicates the first base station to mark an ECN and/or start a congestion information reporting operation.

In a possible implementation, the core network sends the first start message for any QoS flow or DRB. It should be understood that the first start message may be specific to a specific QoS flow or DRB.

Specifically, that the trigger condition is met may be that the first base station sends the third indication information when the first base station has the ECN marking capability and/or the congestion information reporting capability. Alternatively, that the trigger condition is met may be that the first base station sends the third indication information when the first base station does not have the ECN marking capability and/or the congestion information reporting capability.

S1302c: The first base station determines that first data includes a QoS flow for the L4S mechanism.

In a possible implementation, when a QoS flow is established, the core network indicates, to the first base station by using the first data (for example, using a specific QFI), that the QoS flow supports an L4S function, and the first base station determines that a function for the L4S mechanism may need to be enabled subsequently.

Specifically, that the trigger condition is met may be that the third indication information is sent after the first data is received.

It should be understood that, in this embodiment of this application, after the trigger condition is met, whether the first base station sends the third indication information when the first base station has the capability information for the L4S mechanism or sends the third indication information when the first base station does not have the capability information for the L4S mechanism is not limited in this embodiment of this application.

S1302d: The first base station receives a second start message from the second base station, where the second start message indicates the first base station to mark an ECN and/or start a congestion information reporting operation.

In a possible implementation, the second start information indicates the first base station to mark an ECN and/or start a congestion information reporting operation for an uplink data flow or a downlink data flow of a first QoS flow or a first DRB in a terminal device.

It should be understood that the first QoS flow is any QoS flow in the terminal device, and the first DRB is any DRB in the terminal device.

In a possible implementation, the second start information indicates that the second base station has marked or is marking an ECN and/or has performed or is performing a congestion information reporting operation for an uplink data flow or a downlink data flow of a second QoS flow or a second DRB in a terminal device.

It should be understood that the second QoS flow is any QoS flow in the terminal device, and the second DRB is any DRB in the terminal device.

In a possible implementation, the second start information is carried in a third handover request, and the third handover request is used to request the terminal device to be handed over from the second base station to the first base station.

In a possible implementation, the second start information is carried in a first response message, the first response message is in response to a terminal device context query request message sent by the first base station to the second base station, and the first response message indicates a context of the terminal device to the first base station. It should be understood that before receiving the first response message, the first base station sends the terminal device context query request message to the second base station, where the context query request message is used to query for the context of the terminal device.

Specifically, that the trigger condition is met may be that the third indication information is sent in response to the second start message.

It should be understood that, in this embodiment of this application, after the trigger condition is met, whether the first base station sends the third indication information when the first base station has the capability information for the L4S mechanism or sends the third indication information when the first base station does not have the capability information for the L4S mechanism is not limited in this embodiment of this application.

Optionally, the first base station sends a third feedback message to the second base station.

In a possible implementation, when a type of the third feedback message is a handover request acknowledge message, and the first base station rejects admission of the QoS flow, a cause of rejecting admission of the QoS flow is added to the third feedback message, for example, the first base station does not have the ECN marking capability and the congestion information reporting capability for the L4S mechanism, or the first base station does not have the ECN marking capability, or the first base station does not have the congestion information reporting capability.

In a possible implementation, when a type of the third feedback message is a handover preparation failure message, and the first base station does not agree to the third handover request, a cause of rejecting the third handover request is added to the third feedback message, for example, the first base station does not have the ECN marking capability and the congestion information reporting capability for the L4S mechanism, or the first base station does not have the ECN marking capability, or the first base station does not have the congestion information reporting capability.

It should be understood that a quantity of times of reporting the third indication information when the trigger condition is met is not limited in this embodiment of this application. Once the first base station meets the trigger condition, the first base station may send the third indication information to the core network.

Alternatively, the first base station sends the third indication information to the core network only once.

In this way, once the first base station reports the third indication information once, the first base station does not report the same third indication information subsequently. This is because the capability of the first base station rarely changes, and the core network can learn of a capability of the first base station after receiving the third indication information once. This can reduce frequency of information exchange, and reduce resource consumption.

Optionally, in S1303, the first base station no longer sends the third indication information within first duration, where a start moment of the first duration is each sending completion of the third indication information.

For example, each time the first base station completes sending of the third indication information, the first base station starts a second timer, and the first base station no longer sends the third indication information to the core network during running of the timer.

The first duration may be predefined in a protocol, configured by the core network for the first base station, or determined by the first base station.

In the foregoing technical solution, sending frequency of the third indication information is limited by presetting the duration, to avoid two extreme sending manners, namely, frequently sending the third indication information and sending the third indication information once. In this way, capability reporting frequency can be reduced, and timeliness and accuracy of capability reporting can be ensured.

Optionally, in S1304, the core network determines a behavior mode of the first base station for the L4S mechanism based on the third indication information.

Specifically, when the core network determines to enable the L4S function for the terminal device, the core network may indicate, by using fourth indication information, the first base station to perform ECN marking on a specific QoS flow or a specific DRB in the terminal device. Further, the core network may indicate the first base station to perform ECN marking on an uplink data flow or a downlink data flow of the specific QoS flow or DRB.

Alternatively, if the core network sends fifth indication information to the first base station to indicate the first base station to report congestion information for an uplink data flow or a downlink data flow of a specific QoS flow or a specific DRB, the first base station sends sixth indication information to the core network. The sixth indication information indicates a congestion status of the uplink data flow or the downlink data flow of the specific QoS flow or the specific DRB in the terminal device, for example, the congestion status is represented by a percentage. The core network performs ECN marking on the specific QoS flow or the specific DRB in the terminal device based on the congestion information.

Alternatively, if the core network sends seventh indication information to the first base station to indicate the first base station to perform ECN marking and report congestion information for an uplink data flow or a downlink data flow of a specific QoS flow or a specific DRB in the terminal device, the first base station sends eighth indication information to the core network. The eighth indication information indicates a congestion status of the uplink data flow or the downlink data flow of the specific QoS flow or the specific DRB in the terminal device, and the first base station performs ECN marking on the uplink data flow or the downlink data flow of the specific QoS flow or the specific DRB in the terminal device.

Optionally, when the first base station is in a CU-DU separation scenario, after receiving the fourth indication information, the fifth indication information, or the seventh indication information, a CU of the first base station further indicates the fourth indication information, the fifth indication information, or the seventh indication information to a DU. A message between the CU and the DU may be transmitted through an F1 interface.

Specifically, when the first base station is in the CU-DU separation scenario, the first base station receives the fourth indication information or the seventh indication information, the first base station is indicated to perform ECN marking on the uplink data flow or the downlink data flow of the specific QoS flow or DRB, and the DU may send the congestion information to the CU. The CU performs an ECN marking operation at a packet data convergence protocol (packet data convergence protocol, PDCP) layer based on the congestion information. When the first base station is in the CU-DU separation scenario, the first base station receives the fifth indication information or the seventh indication information, and the first base station is indicated to report the congestion information. The CU of the first base station sends the fifth indication information or the seventh indication information to the DU, and the DU reports the congestion information to the CU. A message between the CU and the DU may be transmitted through the F1 interface. For example, the DU may include the congestion information in a data packet sent to the CU.

It should be understood that the DU knows more about an air interface congestion status. Therefore, the CU needs the DU to provide assistance information to determine a specific data packet to which an ECN flag is added.

Optionally, when the first base station is a primary base station in a dual connectivity (dual connectivity, DC) scenario, after receiving the fourth indication information, the fifth indication information, or the seventh indication information, the first base station further indicates the fourth indication information, the fifth indication information, or the seventh indication information to a secondary base station. A message between the first base station and the secondary base station may be transmitted through an Xn interface. For example, the secondary base station may include the congestion information in a data packet sent to the first base station.

Specifically, when the first base station is the primary base station in the DC scenario, the first base station receives the fourth indication information or the seventh indication information, the first base station is indicated to perform ECN marking on the uplink data flow or the downlink data flow of the specific QoS flow or DRB, and the secondary base station may send the congestion information to the first base station. The first base station performs an ECN marking operation based on the congestion information. When the first base station is the primary base station in the DC scenario, the first base station receives the fifth indication information or the seventh indication information, and the first base station is indicated to report the congestion information. The first base station sends the fifth indication information or the seventh indication information to the secondary base station, and the secondary base station reports the congestion information to the first base station. A message between the first base station and the secondary base station may be transmitted through the Xn interface. For example, the secondary base station may include the congestion information in a data packet sent to the first base station.

It should be understood that the secondary base station knows more about a congestion status. Therefore, the first base station needs the secondary base station to provide the congestion information to determine a specific data packet to which an ECN flag is added.

Optionally, transmission of a message received by the core network from the first base station or a message sent by the core network to the first base station may be performed through one or more of an AMF, an SMF, and a UPF.

For example, the third indication information received by the core network from the first base station may be first received through the AMF of the core network, and then sent to the SMF of the core network. A message between the AMF and the base station may be transmitted through an NG interface.

For another example, the first capability reporting request sent by the core network to the first base station may be sent to the AMF of the core network through the SMF of the core network, and then sent to the first base station through the AMF of the core network. A message between the AMF and the base station may be transmitted through an NG interface.

For another example, the fourth indication information, the fifth indication information, or the seventh indication information sent by the core network to the first base station may be sent to the AMF of the core network through the SMF of the core network, and then sent to the first base station through the AMF of the core network. A message between the AMF and the base station may be transmitted through an NG interface.

For another example, the sixth indication information or the eighth indication information sent by the first base station to the core network may be sent to the UPF in the core network through an NG interface. Specifically, the message may be carried in a packet header of a data packet sent by the first base station to the UPF.

Optionally, when the first base station is in the CU-DU separation scenario, before the first base station sends the sixth indication information or the eighth indication information to the core network, the DU may send the congestion information to the CU. This is because the DU knows more about the air interface congestion status. The DU may send the congestion information to the CU through the F1 interface. For example, the DU may include the congestion message in a data packet sent to the CU.

Optionally, when the first base station is the primary base station in the DC scenario, before the first base station sends the sixth indication information or the eighth indication information to the core network, the secondary base station may send the congestion information to the first base station. A message between the first base station and the secondary base station may be transmitted through the Xn interface. For example, the secondary base station may include the congestion information in a data packet sent to the first base station.

The data transmission methods provided in embodiments of this application are described above in detail with reference to FIG. 5 to FIG. 13. It may be understood that, to implement the foregoing functions, the electronic device includes a corresponding hardware structure and/or a corresponding software module for performing each function.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for the particular applications, but it should not be considered that the implementation goes beyond the scope of this application.

Data transmission apparatuses provided in embodiments of this application are described in detail below with reference to FIG. 14 to FIG. 16. It should be understood that, descriptions of apparatus embodiments correspond to the descriptions of the method embodiments. Therefore, for content that is not described in detail, refer to the foregoing method embodiments. For brevity, details of a part of content are not described herein again.

FIG. 14 is a diagram of a data transmission apparatus 1400 according to an embodiment of this application. The apparatus 1400 may include a processing unit 1420, and the processing unit 1420 is configured to process data. The apparatus 1400 may further include a transceiver unit 1410. The transceiver unit 1410 may implement a corresponding communication function. The transceiver unit 1410 may also be referred to as a communication interface, a communication unit, or an interface unit. It should be understood that unless otherwise specified, or if operations such as sending and receiving in this application do not contradict an actual function or internal logic of the operations in related descriptions, the operations may be more generally understood as operations such as outputting and inputting, instead of operations of sending and receiving directly performed by a radio frequency circuit and an antenna.

Optionally, the apparatus 1400 may further include a storage unit. The storage unit may be configured to store instructions and/or data. The processing unit 1420 may read the instructions and/or the data in the storage unit, to cause the apparatus to implement the foregoing method embodiments.

The apparatus 1400 may be configured to perform an action performed by the source base station in the foregoing method embodiments. In this case, the apparatus 1400 may be a communication device or a part that can be configured in the communication device. The transceiver unit 1410 is configured to perform a sending/receiving-related operation on the communication device side in the foregoing method embodiments. The processing unit 1420 is configured to perform a processing-related operation of the source base station in the foregoing method embodiments.

In a design, the apparatus 1400 is configured to perform an action performed by the source base station in the handover process of the terminal device in the method embodiment shown in FIG. 5 or FIG. 6. The action may be performed by a chip, a chip system, or a processor that supports the source base station in implementing the corresponding method, or may be a logical module or software that can implement all or some functions of the source base station.

Specifically, the transceiver unit 1410 is configured to: send a first handover request, where the first handover request includes a quality of service QoS parameter for a protocol data unit PDU set of the terminal device; and receive first indication information, where the first indication information indicates a processing capability of a target base station in the handover process of the terminal device for the PDU set.

The processing unit 1420 is configured to perform a handover operation based on the first indication information.

For parts that are not described in detail, refer to the foregoing method embodiments.

In a design, the data transmission apparatus 1400 is configured to perform an action performed by the source base station in the method embodiment shown in FIG. 7. The action may be performed by a chip, a chip system, or a processor that supports the source base station in implementing the corresponding method, or may be a logical module or software that can implement all or some functions of the source base station.

Specifically, the transceiver unit 1410 is configured to send a first capability query message, where the first capability query message is used to query for a processing capability of at least one candidate base station for a protocol data unit PDU set, and the at least one candidate base station is to be used in a handover process of the terminal device. The transceiver unit 1410 is configured to receive second indication information, where the second indication information indicates the processing capability of the at least one candidate base station for the PDU set. The processing unit 1420 is configured to perform a handover operation based on the second indication information.

For parts that are not described in detail, refer to the foregoing method embodiments.

In a design, the data transmission apparatus 1400 is configured to perform an action performed by the source base station in the method embodiment shown in FIG. 11. The action may be performed by a chip, a chip system, or a processor that supports the source base station in implementing the corresponding method, or may be a logical module or software that can implement all or some functions of the source base station.

Specifically, the transceiver unit 1410 is configured to send a fourth handover request, where the first handover request includes a quality of service QoS parameter for a PDU set. The transceiver unit 1410 is configured to receive a second feedback message. The processing unit 1420 is configured to determine, based on the first feedback message, that a target base station in a handover process of a terminal device is an old base station, where the old base station does not have a processing capability for the protocol data unit PDU set. The processing unit 1420 is configured to perform a second operation.

For parts that are not described in detail, refer to the foregoing method embodiments.

In a design, the data transmission apparatus 1400 is configured to perform an action performed by the first base station in the method embodiment shown in FIG. 13. The action may be performed by a chip, a chip system, or a processor that supports the first base station in implementing the corresponding method, or may be a logical module or software that can implement all or some functions of the first base station.

Specifically, the processing unit 1420 is configured to determine third indication information, where the third indication information indicates capability information of the first base station for a low-latency, low-loss and scalable throughput L4S mechanism. The transceiver unit 1410 is configured to send the third indication information to a core network when a trigger condition is met.

For parts that are not described in detail, refer to the foregoing method embodiments.

It should be understood that a specific process in which the units perform the foregoing corresponding steps is described in detail in the foregoing method embodiments. For brevity, details are not described herein again.

The processing unit 1420 in the foregoing embodiments may be implemented by at least one processor or a processor-related circuit. The transceiver unit 1410 may be implemented by a transceiver or a transceiver-related circuit. The storage unit may be implemented by at least one memory.

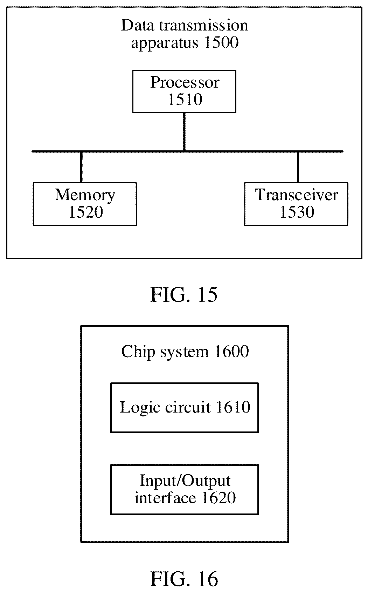

FIG. 15 is a diagram of a structure of a data transmission apparatus 1500 according to an embodiment of this application.

As shown in FIG. 15, an embodiment of this application further provides a data transmission apparatus 1500. The apparatus 1500 includes a processor 1510. The processor 1510 is coupled to a memory 1520. The memory 1520 is configured to store a computer program or instructions and/or data. The processor 1510 is configured to execute the computer program or the instructions and/or the data stored in the memory 1520, so that the methods in the foregoing method embodiments are performed.

Optionally, the apparatus 1500 includes one or more processors 1510.

Optionally, as shown in FIG. 15, the apparatus 1500 may further include the memory 1520.

Optionally, the apparatus 1500 may include one or more memories 1520.

Optionally, the memory 1520 and the processor 1510 may be integrated or separately disposed.

Optionally, as shown in FIG. 15, the apparatus 1500 may further include a transceiver 1530, and the transceiver 1530 is configured to receive and/or send a signal. For example, the processor 1510 is configured to control the transceiver 1530 to receive and/or send a signal.

In a solution, the apparatus 1500 is configured to implement an operation performed by the source base station, the target base station, the first base station, the second base station, or the core network in the foregoing method embodiments.

For example, the processor 1510 is configured to implement a processing-related operation performed by the source base station, the target base station, the first base station, the second base station, or the core network in the foregoing method embodiments, and the transceiver 1530 is configured to implement a sending/receiving-related operation performed by the source base station, the target base station, the first base station, the second base station, or the core network in the foregoing method embodiments.

FIG. 16 is a diagram of a chip system 1600 according to an embodiment of this application. As shown in FIG. 16, the chip system 1600 (or may be referred to as a processing system) includes a logic circuit 1610 and an input/output interface (input/output interface) 1620. The logic circuit is configured to be coupled to the input interface, and transmit a data parameter through the input/output interface, to perform the methods in the foregoing method embodiments. A device in which the chip system 1600 is installed may implement the methods and functions in embodiments of this application. For example, the logic circuit 1610 may be a processing circuit in the chip system 1600, to control the device in which the chip system 1600 is installed, or may be coupled to a storage unit, and invoke instructions in the storage unit, so that the device can implement the methods and functions in embodiments of this application. The input/output interface 1620 may be an input/output circuit in the chip system 1600, to output information processed by the chip system 1600, or input to-be-processed data or signaling information to the chip system 1600 for processing.

In a solution, the chip system 1600 is configured to implement an operation performed by the data transmission apparatus (like the source base station, the target base station, the first base station, the second base station, or the core network) in the foregoing method embodiments.

For example, the logic circuit 1610 is configured to implement a processing-related operation performed by the source base station, the target base station, the first base station, the second base station, or the core network in the foregoing method embodiments, and the input/output interface 1620 is configured to implement a sending/receiving-related operation performed by the source base station, the target base station, the first base station, the second base station, or the core network in the foregoing method embodiments.

An embodiment of this application further provides a computer-readable storage medium. The computer-readable storage medium stores computer instructions used to implement the method performed by the data transmission apparatus (such as the source base station, the target base station, the first base station, the second base station, or the core network) in the foregoing method embodiments.

For example, when the computer program is executed by a computer, the computer is caused to implement the method performed by the data transmission apparatus (such as the source base station, the target base station, the first base station, the second base station, or the core network) in the foregoing method embodiments.

An embodiment of this application further provides a computer program product including instructions. When the instructions are executed by a computer, the computer is caused to implement the method performed by the data transmission apparatus (such as the source base station, the target base station, the first base station, the second base station, or the core network) in the foregoing method embodiments.

For explanations and beneficial effects of related content in any one of the apparatuses provided above, refer to the corresponding method embodiment provided above. Details are not described herein again.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should be further noted that the memory described in this specification is intended to include, but is not limited to, these memories and any other memory of a suitable type.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is applied to a source base station in a handover process of a terminal device, and comprises:
sending a first handover request, wherein the first handover request comprises a quality of service QoS parameter for a protocol data unit PDU set of the terminal device;
receiving first indication information, wherein the first indication information indicates a processing capability of a target base station in the handover process of the terminal device for the PDU set; and
performing a handover operation based on the first indication information.

2. The method according to claim 1, wherein the QoS parameter comprises one or more of a protocol data unit set delay budget PSDB, a protocol data unit set error rate PSER, and protocol data unit set integrated information PSIHI.

3. The method according to claim 1 or 2, wherein the performing the handover operation based on the first indication information comprises:
when the first indication information indicates that the target base station has the processing capability for the PDU set, sending a first buffered data packet, wherein the first buffered data packet comprises related information of the PDU set.

4. The method according to claim 1 or 2, wherein the performing the handover operation based on the first indication information comprises:
when the first indication information indicates that the target base station does not have the processing capability for the PDU set, sending a second buffered data packet, wherein the second buffered data packet does not comprise related information of the PDU set; or determining a new target base station; or sending a second handover request to the target base station, wherein the second handover request does not comprise the QoS parameter for the PDU set.

5. A data transmission method, wherein the method is applied to a source base station of a terminal device, and comprises:
sending a first capability query message, wherein the first capability query message is used to query for a processing capability of at least one candidate base station for a protocol data unit PDU set, and the at least one candidate base station is to be used in a handover process of the terminal device;
receiving second indication information, wherein the second indication information indicates the processing capability of the at least one candidate base station for the PDU set; and
performing a handover operation based on the second indication information.

6. The method according to claim 5, wherein the performing the handover operation based on the second indication information comprises:
determining the candidate base station that has the processing capability for the PDU set indicated by the second indication information as a target base station in the handover process of the terminal device.

7. The method according to claim 5, wherein the performing the handover operation based on the second indication information comprises:
when one of the at least one candidate base station is determined as a target base station in the handover process of the terminal device, if the target base station does not have the processing capability for the PDU set, sending third buffered data, wherein the third buffered data does not comprise related information of the PDU set.

8. A data transmission method, wherein the method is applied to a first base station, and comprises:
determining third indication information, wherein the third indication information indicates capability information of the first base station for a low-latency, low-loss and scalable throughput L4S mechanism; and
sending the third indication information to a core network when a trigger condition is met.

9. The method according to claim 8, wherein the third indication information indicates whether the first base station has both an explicit congestion notification ECN marking capability and a congestion information reporting capability.

10. The method according to claim 8, wherein the third indication information indicates whether the first base station has an ECN marking capability and/or whether the first base station has a congestion information reporting capability.

11. The method according to claim 8, wherein the third indication information indicates whether the first base station has an ECN marking capability or a congestion information reporting capability.

12. The method according to any one of claims 8 to 11, wherein before the determining the third indication information, the method further comprises:
receiving a first capability reporting request, wherein the first capability reporting request is used to request the capability information of the first base station for the L4S mechanism; and
the sending the third indication information when the trigger condition is met comprises:
sending the third indication information in response to the first capability reporting request.

13. The method according to any one of claims 8 to 11, wherein before the determining the third indication information, the method further comprises:
receiving a first start message, wherein the first start message indicates the first base station to mark an ECN and/or start a congestion information reporting operation; and
the sending the third indication information when the trigger condition is met comprises:
sending the third indication information when the first base station has or does not have the ECN marking capability and/or the congestion information reporting capability.

14. A data transmission apparatus, wherein the apparatus comprises a transceiver unit and a processing unit, wherein
the transceiver unit is configured to send a first handover request, wherein the first handover request comprises a quality of service QoS parameter for a protocol data unit PDU set of the terminal device;
the transceiver unit is configured to receive first indication information, wherein the first indication information indicates a processing capability of a target base station for the PDU set in a handover process of the terminal device; and
the processing unit is configured to perform a handover operation based on the first indication information.

15. The apparatus according to claim 14, wherein the QoS parameter comprises one or more of a protocol data unit set delay budget PSDB, a protocol data unit set error rate PSER, and protocol data unit set integrated information PSIHI.

16. The apparatus according to claim 14 or 15, wherein the processing unit is specifically configured to:
when the first indication information indicates that the target base station has the processing capability for the PDU set, control the transceiver unit to send a first buffered data packet, wherein the first buffered data packet comprises related information of the PDU set.

17. The apparatus according to claim 14 or 15, wherein the processing unit is specifically configured to:
when the first indication information indicates that the target base station does not have the processing capability for the PDU set, control the transceiver unit to send a second buffered data packet, wherein the second buffered data packet does not comprise related information of the PDU set; or determine a new target base station; or control the transceiver unit to send a second handover request to the target base station, wherein the second handover request does not comprise the QoS parameter for the PDU set.

18. A data transmission apparatus, wherein the apparatus comprises a transceiver unit and a processing unit, wherein
the transceiver unit is configured to send a first capability query message, wherein the first capability query message is used to query for a processing capability of at least one candidate base station for a protocol data unit PDU set, and the at least one candidate base station is to be used in a handover process of the terminal device;
the transceiver unit is configured to receive second indication information, wherein the second indication information indicates the processing capability of the at least one candidate base station for the PDU set; and
the processing unit is configured to perform a handover operation based on the second indication information.

19. The apparatus according to claim 18, wherein the processing unit is specifically configured to:
determine the candidate base station that has the processing capability for the PDU set indicated by the second indication information as a target base station in the handover process of the terminal device.

20. The apparatus according to claim 18, wherein the processing unit is specifically configured to:
when one of the at least one candidate base station is determined as a target base station in the handover process of the terminal device, if the target base station does not have the processing capability for the PDU set, control the transceiver unit to send third buffered data, wherein the third buffered data does not comprise related information of the PDU set.

21. A data transmission apparatus, wherein the apparatus comprises a processing unit and a transceiver unit, wherein
the processing unit is configured to determine third indication information, wherein the third indication information indicates capability information of the first base station for a low-latency, low-loss and scalable throughput L4S mechanism; and
the transceiver unit is configured to send the third indication information to a core network when a trigger condition is met.

22. The apparatus according to claim 21, wherein the third indication information indicates whether the first base station has both an explicit congestion notification ECN marking capability and a congestion information reporting capability.

23. The apparatus according to claim 21, wherein the third indication information indicates whether the first base station has an ECN marking capability and/or whether the first base station has a congestion information reporting capability.

24. The apparatus according to claim 21, wherein the third indication information indicates whether the first base station has an ECN marking capability or a congestion information reporting capability.

25. The apparatus according to any one of claims 21 to 24, wherein before the processing unit is configured to determine the third indication information, the transceiver unit is further configured to:
receive a first capability reporting request, wherein the first capability reporting request is used to request the capability information of the first base station for the L4S mechanism; and
the transceiver unit is specifically configured to send the third indication information in response to the first capability reporting request.

26. The apparatus according to any one of claims 21 to 24, wherein before the processing unit is configured to determine the third indication information, the transceiver unit is further configured to:
receive a first start message, wherein the first start message indicates the first base station to mark an ECN and/or start a congestion information reporting operation; and
the transceiver unit is specifically configured to send the third indication information when the first base station has or does not have the ECN marking capability and/or the congestion information reporting capability.

27. A data transmission apparatus, comprising a processor, wherein the processor is coupled to a memory, the memory is configured to store a computer program or instructions, and the processor is configured to execute the computer program or the instructions in the memory, to cause the apparatus to perform the method according to any one of claims 1 to 13.

28. A computer-readable storage medium, wherein the computer-readable storage medium stores a computer program or instructions; and when the computer program or the instructions are run on a computer, the computer is caused to perform the method according to any one of claims 1 to 13.

29. A chip, wherein the chip is coupled to a memory, and is configured to read and execute program instructions stored in the memory, to implement the method according to any one of claims 1 to 13.
